(19) Europäisches Patentamt
European Patent Office
Office européen des brevets

(11) **EP 4 668 956 A1**

(12) **EUROPEAN PATENT APPLICATION**
published in accordance with Art. 153(4) EPC

(43) Date of publication:
**24.12.2025 Bulletin 2025/52**

(21) Application number: **23921792.0**

(22) Date of filing: **15.02.2023**

(51) International Patent Classification (IPC):
**H04W 72/12** $^{(2023.01)}$

(52) Cooperative Patent Classification (CPC):
**H04W 72/04; H04W 72/0453; H04W 72/12**

(86) International application number:
**PCT/CN2023/076293**

(87) International publication number:
**WO 2024/168629 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• XU, Jing
  **Dongguan, Guangdong 523860 (CN)**
• LIN, Yanan
  **Dongguan, Guangdong 523860 (CN)**

(74) Representative: **Novagraaf Technologies
Bâtiment O2
2, rue Sarah Bernhardt
CS90017
92665 Asnières-sur-Seine Cedex (FR)**

(54) **TRANSPORT BLOCK SIZE DETERMINING METHOD AND APPARATUS, DEVICE, AND STORAGE MEDIUM**

(57) The present application discloses a transport block size determining method and apparatus, a device, and a storage medium, and relates to the field of communication. The method comprises: determining a transport block size on the basis of a quantity of target resource blocks, wherein the quantity of target resource blocks is determined on the basis of at least one of a first quantity of resource blocks, a second quantity of resource blocks, a first quantity of time-domain units, and a second quantity of time-domain units. Due to the fact that the determined quantity of target resource blocks is closer to a quantity of actually used resource blocks in a data transmission process, the determined transport block size can be closer to a transport block size actually used in the data transmission process, and further, a configured bit rate is closer to an actual bit rate, which is beneficial to data transmission reliability.

510

Determining a TBS based on a target number of resource blocks

FIG. 5

EP 4 668 956 A1

**Description**

**TECHNICAL FIELD**

Embodiments of the present disclosure relate to the technical field of communications, and in particular, relate to a method and apparatus for determining a transport block (TB) size (TBS), and a device and a storage medium thereof.

**RELATED ART**

In data transmission, a TBS generally needs to be determined.

However, in some practices, a number of resource blocks used in a process of determining the TBS is always greater than a number of resource blocks actually used in data transmission between a network device and a terminal device or between terminal devices, such that a calculated TBS is greater than a TBS actually used in the data transmission, an actual transmission bit rate in the data transmission is excessively great, complete TB information fails to be carried in the actual data transmission, and thus reliability of the data transmission is further affected.

Accordingly, how to determine a TBS closer to the TBS actually used in the data transmission is an urgent problem to be solved.

**SUMMARY**

Embodiments of the present disclosure provide a method and apparatus for determining a TBS, and a device and a storage medium thereof. The technical solutions are as follows.

According to some embodiments of the present disclosure, a method for determining a TBS is provided. The method is performed by at least one of a network device or a terminal device, and includes:

determining the TBS based on a target number of resource blocks;
wherein the target number of resource blocks is determined based on at least one of a number of first resource blocks, a number of second resource blocks, a number of first time-domain units, or a number of second time-domain units;
wherein the number of first resource blocks is a number of resource blocks configured for a data channel, the number of second resource blocks includes a number of resource blocks belonging to a first frequency-domain resource in the number of first resource blocks, the number of first time-domain units is a number of time-domain units corresponding to the data channel, and the number of second time-domain units includes a number of time-domain units corresponding to the first frequency-domain resource in the number of first time-domain units.

According to some embodiments of the present disclosure, a method for determining a TBS is provided. The method is performed by at least one of a network device or a terminal device, and includes:

determining the TBS based on a target number of overheads;
wherein the target number of overheads includes at least one of a number of first overheads or a number of second overheads, wherein the number of first overheads is different from the number of second overheads.

According to some embodiments of the present disclosure, an apparatus for determining a TBS. The apparatus includes:

a first determining module, configured to determine the TBS based on a target number of resource blocks;
wherein the target number of resource blocks is determined based on at least one of a number of first resource blocks, a number of second resource blocks, a number of first time-domain units, or a number of second time-domain units;
wherein the number of first resource blocks is a number of resource blocks configured for a data channel, the number of second resource blocks includes a number of resource blocks belonging to a first frequency-domain resource in the number of first resource blocks, the number of first time-domain units is a number of time-domain units corresponding to the data channel, and the number of second time-domain units includes a number of time-domain units corresponding to the first frequency-domain resource in the number of first time-domain units.

According to some embodiments of the present disclosure, an apparatus for determining a TBS. The apparatus includes:

a first determining module, configured to determine the TBS based on a target number of overheads;
wherein the target number of overheads includes at least one of a number of first overheads or a number of second overheads, wherein the number of first overheads is different from the number of second overheads.

According to some embodiments of the present disclosure, a terminal device is provided. The terminal device includes: a processor, a transceiver communicably connected to the processor, and a memory storing one or more executable instructions; wherein the processor is configured to load and execute the one or more executable instructions to cause the terminal device to perform the method for determining the TBS in the above embodiments.

According to some embodiments of the present disclosure, a network device is provided. The network device includes: a processor, a transceiver communicably connected to the processor, and a memory storing one or more executable instructions; wherein the processor is configured to load and execute the one or more executable instructions to cause the terminal device to perform the method for determining the TBS in the above embodiments.

According to some embodiments of the present disclosure, a computer-readable storage medium is provided. The computer-readable storage medium stores one or more executable instructions, wherein the one or more executable instructions, when loaded and executed by a processor, cause the processor to perform the method for determining the TBS in the above embodiments.

According to some embodiments of the present disclosure, a computer program product is provided. The computer program product includes one or more computer instructions, wherein the one or more computer instructions are stored in a computer-readable storage medium, and when read and executed by a processor of a computer device, cause the computer device to perform the method for determining the TBS in the above embodiments.

According to some embodiments of the present disclosure, a chip is provided. The chip includes programmable logical circuity and/or one or more program instructions, wherein the chip, when running, is configured to perform the method for determining the TBS in the above embodiments.

According to some embodiments of the present disclosure, a computer program is provided. The computer program includes one or more computer instructions, wherein the one or more computer instructions, when loaded and executed by a processor of a computer device, cause the computer device to perform the method for determining the TBS in the above embodiments.

The technical solutions according to the embodiments of the present disclosure achieve the following technical effects.

The TBS is determined based on the target number of resource blocks. In addition to the number of first resource blocks, the number of second resource blocks, the number of first time-domain units, and the number of second time-domain units are used, such that the determined target number of resource blocks is closer to the number of resource blocks actually used in the data transmission, the determined TBS is greater than the TBS actually used in the data transmission, the configured bit rate is closer to the actual bit rate, and thus the reliability of the data transmission is improved.

The TBS is determined based on the target number of overheads, and the target number of overheads includes at least one of the number of first overheads or the number of second overheads. Compared with the related art where a default determination rule for the number of overheads, the TBS determined based on the target number of overheads is closer to the TBS actually used in the data transmission, the configured bit rate is closer to the actual bit rate, and the reliability of data transmission is improved.

## BRIEF DESCRIPTION OF DRAWINGS

For clearer descriptions of the technical solutions according to the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.

FIG. 1 is a schematic diagram of an X division duplex (XDD) technology in some practices;

FIG. 2 is a schematic diagram of a method for indicating a frequency-domain resource in some practices;

FIG. 3 is a schematic diagram of a method for indicating a frequency-domain resource in some practices;

FIG. 4 is a schematic diagram of a system for determining a TBS according to some embodiments of the present disclosure;

FIG. 5 is a schematic flowchart of a method for determining a TBS according to some embodiments of the present disclosure;

FIG. 6 is a schematic flowchart of a method for determining a TBS according to some embodiments of the present disclosure;

FIG. 7 is a schematic diagram of a time frequency resource according to some embodiments of the present disclosure;

FIG. 8 is a schematic diagram of a time frequency resource according to some embodiments of the present disclosure;

FIG. 9 is a schematic diagram of a method for determining a TBS according to some embodiments of the present disclosure;

FIG. 10 is a schematic diagram of a method for determining a TBS according to some embodiments of the present disclosure;

FIG. 11 is a schematic flowchart of a method for determining a TBS according to some embodiments of the present disclosure;

FIG. 12 is a schematic diagram of a time frequency resource according to some embodiments of the present disclosure;

FIG. 13 is a schematic diagram of a time frequency resource according to some embodiments of the present disclosure;

FIG. 14 is a schematic diagram of a method for determining a TBS according to some embodiments of the present disclosure;

FIG. 15 is a schematic flowchart of a method for determining a TBS according to some embodiments of the present disclosure;

FIG. 16 is a schematic diagram of a method for determining a TBS according to some embodiments of the present disclosure;

FIG. 17 is a schematic diagram of a method for determining a TBS according to some embodiments of the present disclosure;

FIG. 18 is a schematic diagram of a method for determining a TBS according to some embodiments of the present disclosure;

FIG. 19 is a schematic flowchart of a method for determining a TBS according to some embodiments of the present disclosure;

FIG. 20 is a block diagram of an apparatus for determining a TBS according to some embodiments of the present disclosure;

FIG. 21 is a block diagram of an apparatus for determining a TBS according to some embodiments of the present disclosure; and

FIG. 22 is a schematic structural diagram of a communication device according to some embodiments of the present disclosure.

## DETAILED DESCRIPTION

For clearer descriptions of the objectives, technical solutions, and advantages of the present disclosure, the embodiments of the present disclosure are further detailed hereinafter in conjunction with the accompanying drawings. The exemplary embodiments are detailed herein, and examples are illustrated in the accompanying drawings. When the following description refers to the accompanying drawings, the same numbers in different accompanying drawings represent the same or similar elements unless otherwise indicated. The embodiments described in the following exemplary embodiments do not represent all embodiments consistent with the present disclosure. Rather, they are merely examples of apparatus and methods consistent with some aspects of the present disclosure, as detailed in the appended claims.

The terms in the present disclosure are only used for describing particular embodiments and are not intended to limit the present disclosure. As used in the present disclosure and the appended claims, the singular forms "a," "an," and "the" are intended to include the plural forms as well, unless the context clearly indicates otherwise. It should also be understood that the term "and/or" herein refers to and encompasses any or all possible combinations of one or more associated listed items.

It should be understood that although the terms "first," "second," "third," and the like may be used herein to describe various pieces of information, such information should not be limited to these terms. These terms are only used to distinguish one type of information from another. For example, a first piece of information may also be referred to as a second piece of information, and similarly, a second piece of information is also referred to as a first piece of information, without departing from the scope of the present disclosure. The word "if," as used herein, may be interpreted as "in a case where," "in a case of," or "in response to determining that," depending on the context.

Some related technologies involved in the embodiments of the present disclosure are described as follows.

### (1) Method for determining a TBS

The data channel, for example, a physical downlink shared channel (PDSCH) or a physical uplink shared channel (PUSCH), transmits data in units of TBs. Determination of a TBS in a data channel includes the following three processes. Using a PDSCH as an example, the three processes are as follows.

1) A number $N_{RE}$ of resource elements (REs) of the PDSCH is determined, which includes:

    i. determining a number of REs in a physical resource block (PRB) by the formular:

$$N'_{RE} = N_{sc}^{RB} \times N_{symb}^{sh} - N_{DMRS}^{PRB} - N_{oh}^{PRB};$$

    wherein $N_{sc}^{RB}$ is equal to 12, and represents a number of subcarriers in a resource block (RB), $N_{symb}^{sh}$ represents a number of symbols occupied by a PDSCH in a slot, $N_{DMRS}^{PRB}$ represents a number of REs occupied by a demodulation reference signal (DMRS) in a PRB, and $N_{oh}^{PRB}$ represents a number of overhead REs configured in a PRB. The number of overhead REs includes a number of REs occupied by control information such as a synchronization channel, a physical broadcast channel (PBCH), a physical downlink control channel (PDCCH), a physical uplink control channel (PUCCH), and the like; and

    ii. determining a number of REs in the PDSCH using the formular: $N_{RE} = min(156, N'_{RE}) \times n_{PRB}$ , wherein $N_{PRB}$ represents a number of PRBs allocated by the network device to the terminal device.

2) An amount $N_{info}$ of intermediate information carried over the PDSCH is calculated using the formular: $N_{info} = N_{RE} \times R \times Q_m \times \upsilon$, wherein $N_{RE}$ represents the calculated number of REs in the PDSCH, R represents a bit rate of data transmission over the PDSCH, $Q_m$ represents a modulation order of data on the PDSCH, and $\upsilon$ represents a number of transmission layers of the PDSCH.

3) The TBS is determined based on the amount $N_{info}$ of intermediate information, which includes:

    i. determining the TBS by quantitative table lookup in a case where $N_{info}$ is less than or equal to 3824; or

    ii. determining the TBS by quantitative calculation in a case where $N_{info}$ is greater than 3824.

**(2) Uplink sub-band in a downlink symbol/slot**

In some practices, data is transmitted and received concurrently on different sub-bands in a same sub-frame, which is referred to as an XDD technology and is mainly performed by the network device. The terminal device still only maintains transmitting or receiving data in one sub-frame.

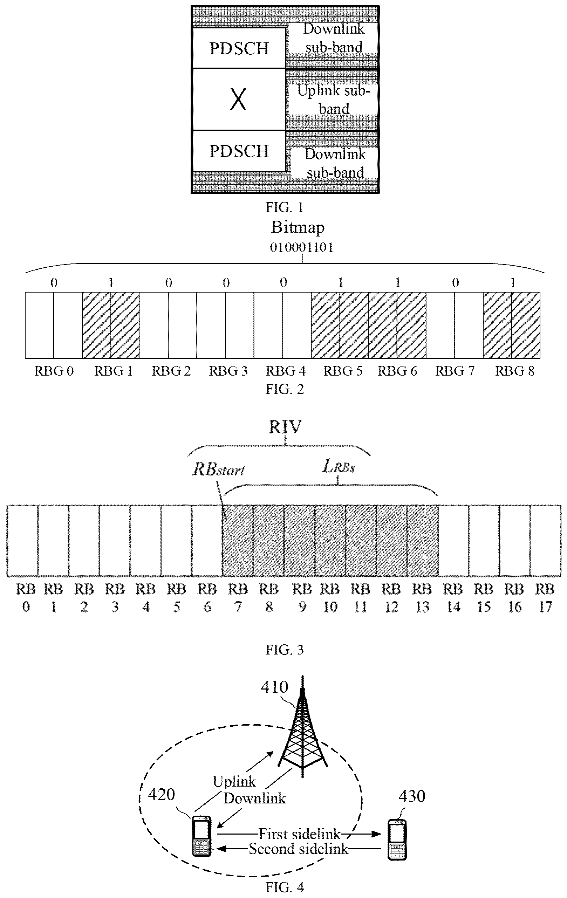

Illustratively, FIG. 1 shows the XDD technology. An intermediate sub-band of a frequency-domain resource corresponding to a downlink symbol/slot is configured as the uplink sub-band. In a case where the terminal device is configured or instructed to receive data in the downlink symbol/slot, for example, receive data carried over the PDSCH, the frequency-domain resource occupied by the PDSCH is overlapped with the uplink sub-band of the frequency-domain resource corresponding to the downlink symbol/slot. For the resource part of the uplink sub-band, the network device is in a state of receiving uplink data of another terminal device, and thus cannot transmits downlink data to the terminal device in the uplink sub-band. That is, the network device transmits the PDSCH to the terminal device in the downlink sub-bands on two sides of the uplink sub-band.

Sub-band configurations in different symbols/slots in a sub-frame are coincident or different, which are not limited in the embodiments of the present disclosure.

**(3) Method for indicating a frequency-domain resource**

The method for indicating a frequency-domain resource of a PDSCH or a PUSCH generally includes the following two types.

• Resource allocation type 0 (Type 0)

Resources are allocated based on Type 0. A frequency-domain resource information domain, that is, RB allocation information, includes a bitmap for indicating or allocating a resource block group (RBG) of a terminal device. An RBG is a set of contiguous PRBs or a set of contiguous virtual resource blocks (VRBs), and a size of an RBG is determined based on high layer parameters and is generally represented by P. RBGs in different bandwidth parts (BWPs) may have different sizes, and RBG in different frequency-domain resource configurations may have different sizes.

For an uplink or downlink BWP i including $N_{BWP,i}^{size}$ RBs, a total number of RBGs is represented by $N_{RBG}$, which is calculated by $N_{RBG} = \lceil (N_{BWP,i}^{size} + (N_{BWP,i}^{size} \bmod P)) \div p \rceil$ . $\lceil \ \rceil$ represents rounding up.

A number of RBs in a first RBG (that is, a size of a first RBG) is $RBG_0^{\text{size}} = P - N_{BWP,i}^{\text{start}} mod P$. In a case where $\left(N_{BHP,i}^{\text{start}} + N_{B\pi P,i}^{\text{size}}\right) mod P > 0$, a number of RBs in a last RBG is $RBG_{\text{last}}^{\text{size}} = \left(N_{B\pi P,i}^{\text{start}} + N_{B\pi P,i}^{\text{size}}\right) mod P$. In a case where $\left(N_{BHP,i}^{start} + N_{B\pi P,i}^{size}\right) mod P \leq 0$, a number of RBs in a last RBG is $RBG_{\text{last}}^{\text{size}} = P$, and sizes of other RBGs are P.

The bitmap includes $N_{RBG}$ bits, and each bit represents an RBG. The RBGs are arranged in an ascending order of frequencies, and an index of the BWP starts from a BWP with a lowest frequency. The sequential bits of the RBG bitmap are mapped from RBG 0 to RBG $N_{RBG}$ - 1 and from a most significant bit (MSB) to a last/least significant bit (LSB). RBGs allocated to the terminal device and RBGs not allocated to the terminal device are represented by different bit values in the bitmap. In a case where a corresponding bit value of an RBG in the bitmap is a first value, the RBG is allocated to the terminal device. In a case where a corresponding bit value of an RBG in the bitmap is a second value, the RBG is not allocated to the terminal device. For example, in a case where an RBG is allocated to the terminal device, a corresponding bit value in the bitmap takes a value of 1; and in a case where an RBG is not allocated to the terminal device, a corresponding bit value in the bitmap takes a value of 0.

Illustratively, as illustrated in FIG. 2, the network device allocates resources for the RBG 0 to RBG 8 based on Type 0, and the bitmap is 010001101. That is, corresponding bit values of RBG 1, RBG 5, RBG 6, and RBG 8 in the bitmap take a value of 1, and corresponding bit values of other RBGs in the bitmap take a value of 0. Thus, RBG 1, RBG 5, RBG 6, and RBG 8 are allocated to the terminal device.

• Resource allocation type 1 (Type 1)

The resources are allocated based on Type 1. A frequency-domain resource information domain, that is, RB allocation information, indicates or allocates a set of contiguous VRBs to the terminal device, and mapping of the VRBs in the set of contiguous VRBs and the PRB is interwoven or non-interwoven, and the VRBs in the set of contiguous VRBs are in an active BWP.

For Type 1, the frequency-domain resource information domain consists of resource indication values (RIVs), and RIVs are determined based on a start VRB serial number $RB_{start}$ and a contiguous length $L_{RBS}$ of the allocated RB using the following formulas.

In a case where $(L_{RBS} - 1) \leq \left[N_{BWP}^{size}/2\right], RIV = N_{BWP}^{size} \times (L_{RBS} - 1) + RB_{start}$.

In a case where

$$(L_{RBS} - 1) > [N_{BWP}^{size}/2], RIV = N_{BWP}^{size} \times \left(N_{BWP}^{size} - L_{RBS} + 1\right) + (N_{BWP}^{size} - 1 - RB_{start})$$

$1 \leq L_{RBS} \leq \left(N_{BWP}^{size} - RB_{start}\right)$. $\llcorner \lrcorner$ represents rounding up.

Illustratively, as illustrated in FIG. 3, the network device allocates resources for RBs 0 to 17 based on Type 1, and indicates that a start serial number $RB_{start}$ of the RB is 7 and a contiguous length $L_{RBS}$ of the RB is 7. That is, RBs 7 to 14 are allocated to the terminal device.

However, the number of resource blocks used in the process of determining the TBS is always greater than the number of resource blocks actually used in the data information transmission between the network device and the terminal device or between the terminal devices, such that the calculated TBS is greater than the TBS actually used in the data transmission, the actual transmission bit rate in the data transmission is further great, the complete TB information cannot be carried in the actual data transmission, and the reliability of the data transmission is further affected.

Thus, the embodiments of the present disclosure provide a method for determining a TBS, such that the calculated TBS is closer to the TBS actually used in the data transmission, the configured bit rate is closer to the actual bit rate, and the reliability of the data transmission is improved.

FIG. 4 is a schematic diagram of a system for determining a TBS according to some embodiments of the present disclosure. The system for determining the TBS includes a network device 410 and a terminal device 420, and/or a terminal device 420 and a terminal device 430, which is not limited in the present disclosure.

The network device in the present disclosure has a wireless communication function, and includes, but is not limited to an evolved Node B (eNB), a radio network controller (RNC), a node B (NB), a base station controller (BSC), a base transceiver station (BTS), a home station (for example, a home evolved Node B or, Home Node B (HNB)), a baseband unit (BBU), an access point (AP), a wireless relay node, a wireless return node, a transmission point (TP), or a transmission and reception point (TRP) in a wireless fidelity (Wi-Fi) system, a next generation Node B (gNB), a TRP, or a TP in a 5th Generation (5G) mobile communication system, one or a set (including a plurality of antenna panels) antenna panels of a station in a 5G system, a network node consisting a gNB or a TP (for example, a baseband unit (BBU), a distributed unit (DU), and the like), a station in a beyond fifth generation (B5G) or a 6th Generation (6G) mobile communication system, a core network (CN), a fronthaul, a backhaul, a radio access network (RAN), a network slice, or a service cell, a primary cell (PCell) , a primary secondary cell (PSCell), a special cell (SpCell), a secondary cell (SCell), or a neighbor cell of a terminal device.

The terminal device 420 and/or the terminal device 430 in the present disclosure is also referred to as a user equipment (UE), an access terminal, a subscriber unit, a subscriber station, a rover station, a mobile station, a remote station, a remote terminal, a mobile device, a user terminal, a terminal, a wireless communication device, a user agent, or a user apparatus. The terminal includes, but is not limited to, handheld devices, wearable devices, in-vehicle devices, Internet of thing (IoT) devices, and the like, such as a mobile phone, a tablet, an e-reader, a laptop, a desktop computer, a television, a game console, a mobile Internet device (MID), an augmented reality (AR) terminal, a virtual reality (VR) terminal, a mixed reality (MR) terminal, a wearable device, a hand shank, an electronic tag, a controller, a wireless terminal in industry control, a wireless terminal in self-driving, a wireless terminal in remote medical, a wireless terminal in smart gride, a wireless terminal in transportation safety, a wireless terminal in smart city, a wireless terminal in smart home, a wireless terminal in remove medical surgery, a cellular phone, a cordless phone, a Session Initiation Protocol (SIP) phone, a wireless local loop (WLL) station, a personal digital assistant (PDA), a TV set-top box (STB), a customer premise equipment (CPE), and the like.

The network device 410 is in communication with the terminal device 420 over an air interface technology, for example, over a Uu interface.

Illustratively, communications between the network device 410 and the terminal device 420 include two communication scenarios, that is, an uplink communication scenario and a downlink communication scenario. Signals are transmitted to the network device 410 in the uplink communication scenario, and signals are transmitted to the terminal device 420 in the downlink communication scenario.

The terminal device 420 is in communication with the terminal device 430 using an air interface technology, for example, over a Uu interface, or a proximity service (PC5) interface.

Illustratively, communications between the terminal device 420 and the terminal device 430 include two communication scenarios, that is, a first sidelink communication scenario and a second sidelink communication scenario. Signals are transmitted to the terminal device 430 in the first sidelink communication scenario, and signals are transmitted to the terminal device 420 in the second sidelink communication scenario.

The terminal device 420 and the terminal device 430 are both within a network coverage and in the same cell, the terminal device 420 and the terminal device 430 are both within a network coverage and in different cells, or the terminal device 420 is within a network coverage and the terminal device 430 is outside the network coverage.

The technical solutions according to the embodiments of the present disclosure are applicable to various communication systems, for example, a global system of mobile communication (GSM), a code-division multiple access (CDMA) system, a wideband code-division multiple access (WCDMA) system, a general packet radio service (GPRS) system, a long-term evolution (LTE) system, an LTE frequency-division duplex (FDD) system, an LTE time-division duplex (TDD) system, an advanced long-term evolution (LTE-A) system, a universal mobile telecommunication system (UMTS), a worldwide interoperability for microwave access (WiMAX) communication system, a 5G mobile communication system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a wireless local area network (WLAN), a wireless fidelity (Wi-Fi), a cellular IoT system, a cellular passive IoT system, evolved systems of a 5G NR system, and evolved systems of a 6G NR system. In some embodiments of the present disclosure, the "NR" is also referred to as a 5G NR system or a 5G system. The 5G mobile communication system includes a non-standalone (NSA) network and/or a standalone (SA) network.

The technical solutions according to the embodiments of the present disclosure are also applicable to machinetype communications (MTC), a long-term evolution-machine (LTE-M) technology, a device-to-device (D2D) network, a machine-to-machine (M2M) network, an IoT network, or other networks. The IoT network includes, for example, Internet of vehicles. Communication modes in the Internet of vehicles system are collectively referred to as vehicle-to-X (V2X, X represents anything). For example, the V2X includes (vehicle-to-vehicle (V2V) communications, vehicle-to-infrastructure (V2I) communications, vehicle-to-pedestrian (V2P) or vehicle-to-network (V2N) communications, and the like.

The system for determining the TBS according to the embodiments of the present disclosure is applicable to communication scenarios, including, but not limited to at least one of an uplink communication scenario, a downlink communication scenario, or a sidelink communication scenario.

It should be noted that in the present disclosure, the bandwidth used for a downlink channel, the bandwidth configured for a downlink channel, the bandwidth used for downlink transmission, the bandwidth used for downlink data transmission, and the bandwidth occupied by downlink transmission resources have the same or similar meanings. Similarly, the bandwidth used for an uplink channel, the bandwidth configured for an uplink channel, the bandwidth used for uplink transmission, the bandwidth used for uplink data transmission, and the bandwidth occupied by uplink transmission resources have the same or similar meanings. Similarly, the bandwidth used for a sidelink channel, the bandwidth configured for a sidelink channel, the bandwidth used for sidelink transmission, the bandwidth used for sidelink data transmission, and the bandwidth occupied by sidelink transmission resources have the same or similar meanings.

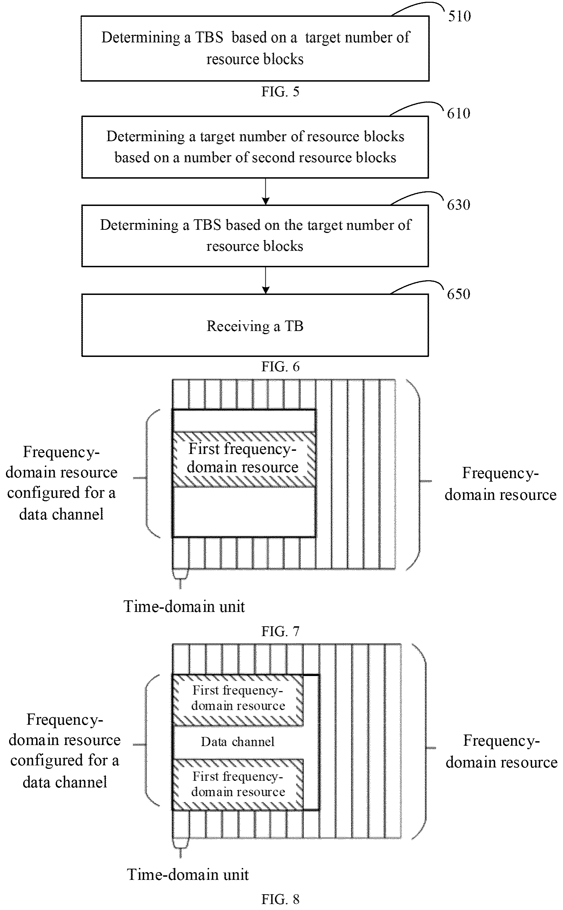

FIG. 5 is a schematic flowchart of a method for determining a TBS according to some embodiments of the present disclosure. The method is illustrated using an example where the method is performed by the network device 410, the terminal device 420, or the terminal device 430 shown in FIG. 4. The method includes at least part of the following processes.

**In 510,** a TBS is determined based on a target number of resource blocks.

The target number of resource blocks is determined based on at least one of a number of first resource blocks, a number of second resource blocks, a number of first time-domain units, or a number of second time-domain units.

The number of first resource blocks is a number of resource blocks configured for a data channel, and the number of first time-domain units is a number of time-domain units corresponding to the data channel.

The data channel is a downlink data channel (for example, a PDSCH), an uplink channel data channel (for example, a PUSCH), or a sidelink data channel. In some embodiments, the data channel is a data channel used by the terminal, and the configuration is dynamic configuration or semi-persistent configuration at a terminal-level granularity.

The number of second resource blocks includes a number of resource blocks belonging to a first frequency-domain resource in the number of first resource blocks, and the number of second time-domain units includes a number of time-domain units corresponding to the first frequency-domain resource in the number of first time-domain units.

In some embodiments, the number of second resource blocks is the number of resource blocks belonging to the first frequency-domain resource in the number of first resource blocks, or is a sum of the number of resource blocks belonging to the first frequency-domain resource in the number of first resource blocks and a number N of resource blocks. The number N of resource blocks is a number of resource blocks acquired by extending the first frequency-domain resource in a frequency-domain direction, and N is greater than or equal to 0.

In some embodiments, a transmission direction of a frequency-domain resource occupied by the data channel is coincident with a data transmission direction on the first frequency-domain resource. For example, in a case where the data channel is a downlink data channel, downlink transmission is performed on the first frequency-domain resource; in a case where the data channel is an uplink data channel, uplink transmission is performed on the first frequency-domain resource; or, in a case where the data channel is a first sidelink channel, first sidelink transmission is performed on the first frequency-domain resource.

In some embodiments, a transmission direction of a frequency-domain resource occupied by the data channel is not coincident with a data transmission direction of the first frequency-domain resource. For example, in a case where the data channel is a downlink data channel, uplink transmission or sidelink transmission is performed on the first frequency-domain resource; in a case where the data channel is an uplink data channel, downlink transmission or sidelink transmission is performed on the first frequency-domain resource; or, in a case where the data channel is a first sidelink channel, uplink transmission, downlink transmission, or second sidelink transmission is performed on the first frequency-domain resource.

In some embodiments, the method is applicable to a communication scenario supporting the XDD technology, a time frequency resource for configuring the data channel for the terminal device by the network device includes the first frequency-domain resource, and the first frequency-domain resource is used to transmit the data channel or cannot be used to transmit the data channel. That is, for the data channel, the first frequency-domain resource is an available frequency-domain resource or an unavailable frequency-domain resource.

In some embodiments, the first frequency-domain resource is at least one of an uplink sub-band, a downlink sub-band, a sidelink sub-band, or a guard sideband.

In some embodiments, the number of REs in the data channel is determined based on the target number of resource blocks, the amount of intermediate information carried over the data channel is determined based on the number of REs in the data channel, and the TBS is determined based on the amount of intermediate information carried over the data channel by quantitative table lookup or quantitative calculation.

In some embodiments, the amount of intermediate information carried over the data channel refers to an amount of intermediate information that may be carried over the data channel, and is not limited to an amount of intermediate information that is actually or definitely carried over the data channel.

In some embodiments, the TBS is determined based on at least one of a modulation mode of the data channel, a number of transmission layers of the data channel, a bit rate of the data channel, or a number of REs in the data channel.

In some embodiments, the TBS is determined based on a modulation mode of the data channel, a number of transmission layers of the data channel, a bit rate of the data channel, or a number of REs in the data channel.

In summary, in the method according to the embodiments, the TBS is determined based on the target number of resource blocks. As the target number of resource blocks determined based on at least one of the number of first resource blocks, the number of second resource blocks, the number of first time-domain units, or the number of second time-domain units is closer to the number of resource blocks actually used in the data transmission, the determined TBS is closer to the TBS actually used in the data transmission, the configured bit rate is closer to the actual bit rate, and the reliability of the data transmission is improved. In addition, the number of second resource blocks and the number of second time-domain units are configured based on distributions of available frequency-domain resources and unavailable frequency-domain resources in different configuration scenarios of the data channel, such that different solutions are provided for determining the target number of resource blocks.

Based on types of the first frequency-domain resource, the target number of resource blocks is determined in the following three types:

**Type 1:** The first frequency-domain resource is an available frequency-domain resource, and the target number of resource blocks is determined based on the number of second resource blocks;

**Type 2:** The first frequency-domain resource is an unavailable frequency-domain resource, and the target number of resource blocks is determined based on at least one of the number of first resource blocks, the number of second resource blocks, the number of first time-domain units, or the number of second time-domain units; and

**Type 3:** Repetitive transmission is performed on a transport block, and the target number of resource blocks is determined based on a number of third resource blocks.

**In Type 1:** The first frequency-domain resource is an available frequency-domain resource, and the target number of resource blocks is determined based on the number of second resource blocks.

FIG. 6 is a schematic flowchart of a method for determining a TBS according to some embodiments of the present disclosure. The method is illustrated using an example where the method is performed by the network device 410, the terminal device 420, or the terminal device 430 shown in FIG. 4. The method includes at least part of the following processes.

**In 610,** the target number of resource blocks is determined based on the number of second resource blocks.

The number of second resource blocks is the number of resource blocks belonging to the first frequency-domain resource in the number of first resource blocks. The first frequency-domain resource is an available frequency-domain resource corresponding to the data channel. The first frequency-domain resource is used to transmit the data channel. The transmission direction of the frequency-domain resource occupied by the data channel is coincident with the data transmission direction on the first frequency-domain resource.

The number of first resource blocks is the number of resource blocks configured for the data channel. The data channel is a downlink data channel (for example, a PDSCH), an uplink data channel (for example, a PUSCH), or a sidelink data channel.

In some embodiments, the number of first resource blocks is a number of resource blocks dynamically configured for the data channel. For example, the number of first resource blocks is dynamically configured for the terminal device based on downlink control information (DCI).

In some embodiments, the number of first resource blocks is indicated by a frequency-domain resource indication field in a DCI format 1-0, a DCI format 1-1, or a DCI format 1-2.

In some embodiments, the number of first resource blocks is a number of resource blocks semi-persistently configured for the data channel. In some embodiments, the number of first resource blocks is indicated by activating a frequency-domain resource indication field in a DCI format 1-0, a DCI format 1-1, or a DCI format 1-2 in semi-persistent scheduling (SPS).

In some embodiments, the first frequency-domain resource is configured by the network device.

In some embodiments, the first frequency-domain resource is dynamically or semi-persistently configured.

The transmission direction of the frequency-domain resource occupied by the data channel is coincident with the data transmission direction on the first frequency-domain resource. For example, in a case where the data channel is a downlink data channel, downlink transmission is performed on the first frequency-domain resource; in a case where the data channel is an uplink data channel, uplink transmission is performed on the first frequency-domain resource; or, in a case where the data channel is a first sidelink channel, first sidelink transmission is performed on the first frequency-domain resource.

In some embodiments, the first frequency-domain resource does not include a guard sideband, or the first frequency-domain resource includes a guard sideband.

In some embodiments, the guard sideband is configured by the network device, determined based on a capability of the terminal device, or configured by the network device based on a report capability of the terminal device.

In some embodiments, the terminal device determines the target number of resource blocks based on the number of second resource blocks, and determines the guard sideband based on the capability of the terminal device.

In some embodiments, the terminal device determines the target number of resource blocks based on the number of second resource blocks, and the network device configures the guard sideband for the terminal device.

In some embodiments, the network device determines the target number of resource blocks based on the number of second resource blocks, and configures the guard sideband for the terminal device.

In some embodiments, the network device determines the target number of resource blocks based on the number of second resource blocks, and configures the guard sideband for the terminal device based on the report capability of the terminal device.

In some embodiments, the guard sideband is dynamically or semi-persistently configured.

In some embodiments, in a case where the data channel is a downlink data channel, the first frequency-domain resource is an available frequency-domain resource corresponding to the downlink data channel, the number of second resource blocks includes the number of resource blocks belonging to the downlink transmission resource in the number of first resource blocks, or the number of second resource blocks includes the number of resource blocks belonging to the downlink transmission resource and the guard sideband in the number of first resource blocks.

In some embodiments, in a case where the data channel is an uplink data channel, the first frequency-domain resource is an available frequency-domain resource corresponding to the downlink data channel, the number of second resource blocks includes the number of resource blocks belonging to the uplink transmission resource in the number of first resource blocks, or the number of second resource blocks includes the number of resource blocks belonging to the uplink transmission resource and the guard sideband in the number of first resource blocks.

In some embodiments, in a case where the data channel is a first sidelink channel, the first frequency-domain resource is an available frequency-domain resource corresponding to the first sidelink channel, the number of second resource blocks includes the number of resource blocks belonging to the first sidelink transmission resource in the number of first resource blocks, or the number of second resource blocks includes the number of resource blocks belonging to the first sidelink transmission resource and the guard sideband in the number of first resource blocks. The first sidelink transmission resource is a sidelink resource corresponding to the first sidelink channel.

In some embodiments, the frequency-domain resource corresponding to the time-domain unit of the data channel includes at least one resource part for the data channel, that is, at least one resource part belonging to the first frequency-domain resource. The time-domain unit is at least one of a frame, a subframe, a slot, a symbol set, or a symbol.

In some embodiments, the time frequency resource corresponding to the data channel includes at least one first resource part. In some embodiments, the time frequency resource corresponding to the data channel includes one first resource part and one second resource part, or, the time frequency resource corresponding to the data channel includes two first resource parts and one second resource part.

The first resource part is configured by the network device or predefined in a communication protocol, and the second resource part is configured by the network device, or is predefined in a communication protocol.

In some embodiments, the first resource part includes at least one of an available resource, a guard sideband, or an undetermined resource. The undetermined resource is a time frequency resource with an undetermined transmission direction.

In some embodiments, the first resource part is an available resource.

In some embodiments, the second resource part includes at least one of an unavailable resource, a guard sideband, or an undetermined resource. The undetermined resource is a time frequency resource with an undetermined transmission direction.

In some embodiments, the second resource part is an unavailable resource.

In the present disclosure, the available resource includes at least one of an available frequency-domain resource or an available time-domain resource. The transmission direction of the available resource is coincident with the transmission direction corresponding to the data channel.

In the present disclosure, the unavailable resource includes at least one of an unavailable frequency-domain resource or an unavailable time-domain resource. The transmission direction of the unavailable resource is not coincident with the transmission direction corresponding to the data channel.

In the present disclosure, the guard sideband is used to transmit data or not used to transmit data. In a case where the guard sideband is used to transmit data, and the transmission direction of the guard sideband is coincident with the transmission direction of the frequency-domain resource corresponding to the data channel, the guard sideband belongs to the first resource part. In a case where the guard sideband is not used to transmit data, and the transmission direction of the guard sideband is not coincident with the transmission direction of the frequency-domain resource corresponding to the data channel, the guard sideband belongs to the second resource part. In the same transmission, the same guard sideband does not belong to the first resource part and the second resource part concurrently.

In the present disclosure, in a case where a transmission direction of the undetermined resource is coincident with the transmission direction of the frequency-domain resource corresponding to the data channel, the undetermined resource belongs to the first resource part. In a case where the a transmission direction of the undetermined resource is not coincident with the transmission direction of the frequency-domain resource corresponding to the data channel, the undetermined resource belongs to the second resource part. In the same transmission, the same undetermined resource does not belong to the first resource part and the second resource part concurrently.

Illustratively, in a case where the data channel is used for downlink data transmission, the first resource part includes: the downlink transmission resource; the downlink transmission resource and the guard sideband; the downlink transmission resource and the undetermined resource; the guard sideband; the guard sideband and the undetermined resource; the undetermined resource; or the downlink transmission resource, the guard sideband, and the undetermined resource. The available resource includes the downlink transmission resource.

Illustratively, in a case where the data channel is used for downlink data transmission, the second resource part includes at least one of the uplink transmission resource, the sidelink transmission resource, the guard sideband, or the undetermined resource. The unavailable resource includes the uplink transmission resource and/or the sidelink transmission resource.

Illustratively, in a case where the data channel is used for uplink data transmission, the first resource part includes: the uplink transmission resource; the uplink transmission resource and the guard sideband; the uplink transmission resource and the undetermined resource; the guard sideband; the guard sideband and the undetermined resource; the undetermined resource; or the uplink transmission resource, the guard sideband, and the undetermined resource. The available resource includes the uplink transmission resource.

Illustratively, in a case where the data channel is used for uplink data transmission, the second resource part includes at least one of the downlink transmission resource, the sidelink transmission resource, the guard sideband, or the undetermined resource. The unavailable resource includes the downlink transmission resource and/or the sidelink transmission resource.

In a case where the data channel is used for sidelink data transmission, for the first resource part and the second resource part, reference may be made to descriptions of the data channel for the downlink data transmission or the uplink data transmission, which is not described herein any further.

In some embodiments, the first resource part is referred to as a first resource for short, and the second resource part is referred to as a second resource for short.

In some embodiments, the data channel is a downlink data channel, and in a case where the first frequency-domain resource is an available frequency-domain resource, the number of second resource blocks includes at least one of: a number of resource blocks belonging to the downlink transmission resource in the number of first resource blocks, a number of resource blocks belonging to the guard sideband in the number of first resource blocks, or a number of resource blocks belonging to the undetermined resource in the number of first resource blocks.

In some embodiments, the data channel is an uplink data channel, and in a case where the first frequency-domain resource is an available frequency-domain resource of the data channel, the number of second resource blocks includes at least one of: a number of resource blocks belonging to the uplink transmission resource in the number of first resource blocks, a number of resource blocks belonging to the guard sideband in the number of first resource blocks, or a number of resource blocks belonging to the undetermined resource in the number of first resource blocks.

In some embodiments, the data channel is a first sidelink channel, and in a case where the first frequency-domain resource is an available frequency-domain resource of the data channel, the number of second resource blocks includes at least one of: a number of resource blocks belonging to the first sidelink transmission resource in the number of first resource blocks, a number of resource blocks belonging to the guard sideband in the number of first resource blocks, or a number of resource blocks belonging to the undetermined resource in the number of first resource blocks.

The first sidelink transmission resource is a sidelink resource corresponding to the first sidelink channel.

In some embodiments, as illustrated in FIG. 7, the frequency-domain resource corresponding to the time-domain unit of the data channel includes one first resource part, that is, one resource part for the data channel, or one resource part belonging to the first frequency-domain resource.

In some embodiments, as illustrated in FIG. 8, the time frequency resource corresponding to the data channel includes two first resource parts. That is, the frequency-domain resource corresponding to the time-domain unit of the data channel includes two resource parts for the data channel, that is, the frequency-domain resource configured for the data channel includes two resource parts belonging to the first frequency-domain resource.

The time-domain unit configured for the data channel includes the second resource or does not include the second resource.

The target number of resource blocks is determined based on the number of second resource blocks. That is, the number of second resource blocks is determined as the target number of resource blocks.

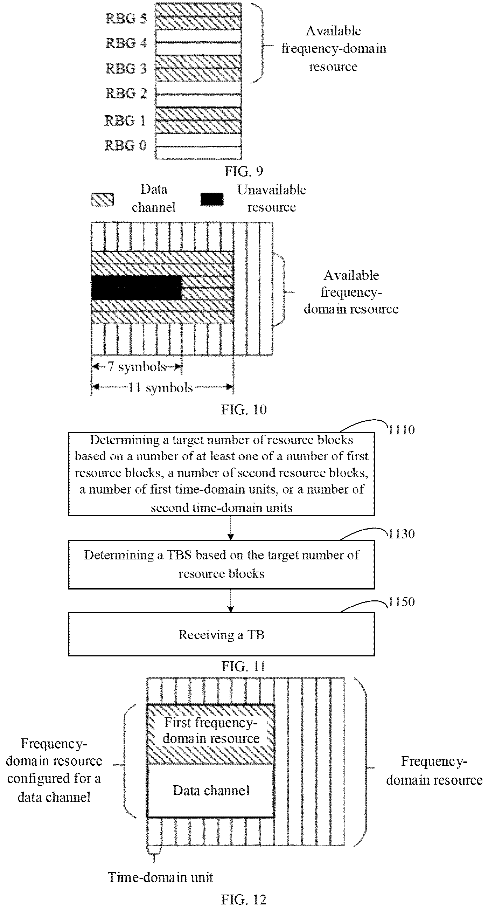

Illustratively, the time-domain unit configured for the data channel does not include the second resource. As illustrated in FIG. 9, the terminal device 420 receives DCI of a scheduling PDSCH transmitted by the network device 410 to indicate that three RBGs are allocated to the PDSCH. The three RBGs are RBG 1, RBG 3, and RBG 5. Assuming that each RBG includes two PRBs, then the number $N_1$ of first resource blocks is equal to a product of 3 and 2, that is, 6. In some embodiments, an RBG includes four, six, or eight PRBs, and numbers of PRBs in various RBGs are the same or different. Two RBGs are in the available resource part (that is, the downlink frequency-domain resource part, or the downlink frequency-domain resource part and the guard sideband part), and then the number $N_2$ of second resource blocks is equal to a product of 2 and 2, that is, 4, and the target number $N_{PRB}$ of resource blocks is equal to $N_2$, that is, 4.

Illustratively, the time-domain unit configured for the data channel includes the second resource. As illustrated in FIG. 10, the terminal device 420 receives DCI of a scheduling PDSCH transmitted by the network device 410 to indicate that six RBGs are allocated to the PDSCH. A number of symbols corresponding to the PDSCH (the number of first time-domain units) is 11, and then the number $N_1$ of first resource blocks is equal to 6, and the number $M_1$ of first time-domain units is 11. Two PRBs are in the second resource part (for example, the uplink frequency-domain resource part, or the uplink frequency-domain resource part and the guard sideband part), and the number of symbols corresponding to the second resource part is 7, and then the number of second resource blocks is determined based on a product of a sum of the number of PRBs in the downlink frequency-domain resource part and the number of PRBs in the second resource part and a first difference. The first difference is an absolute value of a difference between 1 and a first ratio, the first ratio is a ratio of the number of symbols corresponding to the second resource part to the number of symbols corresponding to the data channel. That is, $N_2 = 4 + 2 \times (1 - 7/11) \approx 4.7273$.

Alternatively, the number of second resource blocks is determined based on a product of a sum of the number of PRBs in the downlink frequency-domain resource part and a first difference and a product of the number of PRBs configured for the second resource part and the first difference. The first ratio is a ratio of the number of symbols corresponding to the second resource part to the number of symbols corresponding to the data channel, and the first difference is an absolute value of a difference between 1 and a first ratio. That is, $N_2 = 4 \times \frac{7}{11} + 6 \times \left(1 - \frac{7}{11}\right) \approx 4.7273$.

In a case where $N_2 = 5$ by rounding up, $n_{PRB} = N_2 = 5$. In a case where $N_2 = 4$ by rounding down, $n_{PRB} = N_2 = 4$.

**In 630,** the TBS is determined based on the target number of resource blocks.

In some embodiments, the number of REs in the data channel is determined based on the target number of resource blocks, the amount of intermediate information carried over the data channel is determined based on the number of REs in the data channel, and the TBS is determined based on the amount of intermediate information carried over the data channel by quantitative table lookup or quantitative calculation.

In some embodiments, the amount of intermediate information carried over the data channel refers to an amount of intermediate information that may be carried over the data channel, and is not limited to an amount of intermediate information that is must carried over the data channel.

In some embodiments, the TBS is determined based on at least one of a modulation mode of the data channel, a number of transmission layers of the data channel, a bit rate of the data channel, or a number of REs in the data channel.

In some embodiments, the TBS is determined based on the modulation mode of the data channel, the number of transmission layers of the data channel, the bit rate of the data channel, and the number of REs in the data channel.

In some embodiments, the method for determining the TBS based on the target number of resource blocks includes the following processes.

(1) A number $N'_{RE}$ of REs in a resource block is calculated using the formula: $N'_{RE} = N^{RB}_{sc} \times N^{sh}_{symb} - N^{PRB}_{DMRS} - N^{PRB}_{oh}$.

$N^{RB}_{sc}$ is equal to 12, and represents the number of subcarriers in the RB, $N^{sh}_{symb}$ represents the number of symbols occupied by the PDSCH in the slot, $N^{PRB}_{DMRS}$ represents the number of REs occupied by the DMRS in the PRB, and $N^{PRB}_{oh}$ represents the number of overhead REs configured in the PRB. The number of overhead REs includes the number of REs occupied by control information such as the synchronization channel, the PBCH, the PDCCH, the PUCCH, and the like.

(2) A total number $N_{RE}$ of REs in the data channel is determined based on the target number of resource blocks using the formula: $N_{RE} = min(156, N'_{RE}) \times n_{PRB}$.

$N_{PRB} = N_2$, $N_{PRB}$ represents the target number of resource blocks, and $N_2$ represents the number of second resource blocks.

(3) An amount $N_{info}$ of intermediate information carried over the data channel is calculated based on the total number $N_{RE}$ of REs in the data channel using the formular: $N_{info} = N_{RE} \times R \times Q_m \times \upsilon$.

$N_{RE}$ represents the calculated total number of REs in the data channel, R represents the bit rate of data transmission over the data channel, $Q_m$ represents the modulation order of data on the data channel, and $\upsilon$ represents the number of transmission layers of the data channel.

(4) The TBS is determined based on the amount $N_{info}$ of intermediate information carried over the data channel.

The TBS is determined by quantitative table lookup in a case where $N_{info}$ is less than or equal to 3824.

The TBS is determined by quantitative calculation in a case where $N_{info}$ is greater than 3824.

In some embodiments, the TBS is determined by table lookup or calculation in the protocol in the 3rd Generation Partnership Project (3GPP) (for example, Section 5.1.3.2 of TS 38.214, version 17.2.0).

**In 650,** the transport block is received.

The TBS is a TBS determined based on the target number of resource blocks.

In some embodiments, the frequency-domain resource corresponding to the transport block in the method according to the embodiments is determined based on at least one of dynamic scheduling or semi-persistent scheduling.

In some embodiments, in a case where the method according to the embodiments is applicable to a scenario where the transport block is dynamically scheduled, that is, in a case where the frequency-domain resource corresponding to the transport block in the embodiments is determined based on dynamic scheduling, the data channel is a downlink data channel, and the frequency-domain resource of the downlink data channel is located in a downlink frequency-domain resource part, that is, is not located in an uplink frequency-domain resource part and/or the guard sideband and/or a sidelink frequency-domain resource part.

In some embodiments, in a case where the method according to the embodiments is applicable to a scenario where the transport block is dynamically scheduled, that is, in a case where the frequency-domain resource corresponding to the transport block in the embodiments is determined based on dynamic scheduling, the data channel is an uplink data channel, and the frequency-domain resource of the uplink data channel is located in the uplink frequency-domain resource part, that is, is not located in the downlink frequency-domain resource part and/or the guard sideband and/or the sidelink frequency-domain resource part.

In some embodiments, in a case where the method according to the embodiments is applicable to a scenario where the transport block is dynamically scheduled, that is, in a case where the frequency-domain resource corresponding to the transport block in the embodiments is determined based on dynamic scheduling, the data channel is a first sidelink channel, and the frequency-domain resource of the sidelink data channel is located in a first sidelink frequency-domain resource part, that is, is not located in the uplink frequency-domain resource part and/or the downlink frequency-domain resource part and/or the guard sideband and/or a second sidelink frequency-domain resource part.

In some embodiments, the method according to the embodiments is applicable to a first frequency-domain resource indication type and/or a second frequency-domain resource indication type. The first frequency-domain resource indication type indicates a frequency-domain resource corresponding to the transport block by the bitmap, and the second frequency-domain resource indication type indicates the frequency-domain resource corresponding to the transport block by a start serial number of the resource block and a contiguous length of the resource block. Alternatively, the second frequency-domain resource indication type indicates the frequency-domain resource corresponding to the transport block by the RIV.

In some embodiments, the first frequency-domain resource indication type is Type 0 described above, and the second frequency-domain resource indication type is Type 1 as described above.

In some embodiments, in a case where the method according to the embodiments is applicable to the first frequency-domain resource indication type or Type 0, the data channel is a downlink data channel, and the frequency-domain resource of the downlink data channel is located in the downlink frequency-domain resource part, that is, is not located in the uplink frequency-domain resource part and/or the guard sideband and/or the sidelink frequency-domain resource part.

In some embodiments, in a case where the method according to the embodiments is applicable to the first frequency-domain resource indication type or Type 0, the data channel is an uplink data channel, and the frequency-domain resource of the uplink data channel is located in the uplink frequency-domain resource part, that is, is not located in the downlink frequency-domain resource part and/or the guard sideband and/or the sidelink frequency-domain resource part.

In some embodiments, in a case where the method according to the embodiments is applicable to the first frequency-domain resource indication type or Type 0, the data channel is a first sidelink channel, and the frequency-domain resource of the sidelink data channel is located in the first sidelink frequency-domain resource part, that is, is not located in the uplink frequency-domain resource part and/or the downlink frequency-domain resource part and/or the guard sideband and/or the second sidelink frequency-domain resource part.

In summary, in the method according to the present disclosure, the TBS is determined based on the target number of resource blocks. As the target number of resource blocks determined based on the number of second resource blocks is closer to the number of resource blocks actually used in the data transmission, the determined TBS is closer to the TBS actually used in the data transmission, the configured bit rate is closer to the actual bit rate, and the reliability of data transmission is improved. In addition, as the number of first resource blocks and the number of second resource blocks are dynamically or semi-persistently configured, the flexibility of data transmission is improved. In addition, the first frequency-domain resource includes the guard sideband or does not include the guard sideband, such that the utilization of resources is improved, and the flexibility of the data transmission is improved.

In Type 2: The first frequency-domain resource is an unavailable frequency-domain resource, and the target number of resource blocks is determined based on at least one of the number of first resource blocks, the number of second resource blocks, the number of first time-domain units, or the number of second time-domain units.

FIG. 11 is a schematic flowchart of a method for determining a TBS according to some embodiments of the present disclosure. The method is illustrated using an example where the method is performed by the network device 410, the terminal device 420, or the terminal device 430 shown in FIG. 4. The method includes at least part of the following processes.

In S1110, the target number of resource blocks is determined based on at least one of the number of first resource blocks, the number of second resource blocks, the number of first time-domain units, or the number of second time-domain units.

The number of first resource blocks is the number of resource blocks configured for the data channel. The data channel is a downlink data channel (for example, a PDSCH), an uplink data channel (for example, a PUSCH), or a sidelink data channel.

The number of second resource blocks is the number of resource blocks belonging to the first frequency-domain resource in the number of first resource blocks. The first frequency-domain resource is an unavailable frequency-domain resource corresponding to the data channel. The first frequency-domain resource is not used to transmit the data channel. The transmission direction of the frequency-domain resource occupied by the data channel is not coincident with the data transmission direction on the first frequency-domain resource.

In some embodiments, the number of first resource blocks is a number of resource blocks dynamically configured for the data channel. For example, the number of first resource blocks is dynamically configured for the terminal device based on DCI.

In some embodiments, the number of first resource blocks is indicated by a frequency-domain resource indication field in a DCI format 1-0, a DCI format 1-1, or a DCI format 1-2.

In some embodiments, the number of first resource blocks is a number of resource blocks semi-persistently configured for the data channel. In some embodiments, the number of first resource blocks is indicated by activating a frequency-domain resource indication field in a DCI format 1-0, a DCI format 1-1, or a DCI format 1-2 in SPS.

In some embodiments, the first frequency-domain resource is configured by the network device.

In some embodiments, the first frequency-domain resource is dynamically or semi-persistently configured.

The transmission direction of the frequency-domain resource occupied by the data channel is not coincident with the data transmission direction on the first frequency-domain resource. That is, the data channel is not coincident with the data transmission direction on the first frequency-domain resource. For example, in a case where the data channel is a downlink data channel, uplink transmission or sidelink transmission is performed on the first frequency-domain resource; in a case where the data channel is an uplink data channel, downlink transmission or sidelink transmission is performed on the first frequency-domain resource; or, in a case where the data channel is a first sidelink channel, uplink transmission or downlink transmission or second sidelink transmission is performed on the first frequency-domain resource.

In some embodiments, the first frequency-domain resource does not include a guard sideband, or the first frequency-domain resource includes a guard sideband.

In some embodiments, the guard sideband is configured by the network device, determined based on a capability of the terminal device, or configured by the network device based on a report capability of the terminal device.

In some embodiments, the terminal device determines the target number of resource blocks based on at least one of the number of first resource blocks, the number of second resource blocks, the number of first time-domain units, or the number of second time-domain units, and determines the guard sideband based on the capability of the terminal device.

In some embodiments, the terminal device determines the target number of resource blocks based on at least one of the number of first resource blocks, the number of second resource blocks, the number of first time-domain units, or the number of second time-domain units, and the network device configures the guard sideband for the terminal device.

In some embodiments, the network device determines the target number of resource blocks based on at least one of the number of first resource blocks, the number of second resource blocks, the number of first time-domain units, or the number of second time-domain units, and configures the guard sideband for the terminal device.

In some embodiments, the network device determines the target number of resource blocks based on at least one of the number of first resource blocks, the number of second resource blocks, the number of first time-domain units, or the number of second time-domain units, and configures the guard sideband for the terminal device based on the report capability of the terminal device.

In some embodiments, the guard sideband is dynamically or semi-persistently configured.

In some embodiments, in a case where the data channel is a downlink data channel, the number of second resource blocks includes the number of resource blocks belonging to the uplink transmission resource in the number of first resource blocks, the number of resource blocks belonging to the uplink transmission resource and the guard sideband in the number of first resource blocks, the number of resource blocks belonging to the sidelink transmission resource in the number of first resource blocks, the number of resource blocks belonging to the sidelink transmission resource and the guard sideband in the number of first resource blocks, the number of resource blocks belonging to the uplink transmission resource and the sidelink transmission resource in the number of first resource blocks, or the number of resource blocks belonging to the uplink transmission resource, the sidelink transmission resource, and the guard sideband in the number of first resource blocks.

In some embodiments, in a case where the data channel is an uplink data channel, the number of second resource blocks includes the number of resource blocks belonging to the downlink transmission resource in the number of first resource blocks, the number of resource blocks belonging to the downlink transmission resource and the guard sideband in the number of first resource blocks, the number of resource blocks belonging to the sidelink transmission resource in the number of first resource blocks, the number of resource blocks belonging to the sidelink transmission resource and the guard sideband in the number of first resource blocks, the number of resource blocks belonging to the downlink transmission resource and the sidelink transmission resource in the number of first resource blocks, or the number of resource blocks belonging to the downlink transmission resource, the sidelink transmission resource, and the guard sideband in the number of first resource blocks.

In some embodiments, in a case where the data channel is a first sidelink channel, the number of second resource blocks includes the number of resource blocks belonging to the first type resource in the number of first resource blocks or the number of resource blocks belonging to the first type resource and the guard sideband in the number of first resource blocks. The first type resource includes at least one of the second sidelink transmission resource, the uplink transmission resource, or the downlink transmission resource. The transmission direction of the second sidelink transmission resource is not coincident with the transmission direction of the first sidelink transmission resource, and the first sidelink transmission resource is a sidelink resource corresponding to the first sidelink channel.

In some embodiments, the frequency-domain resource in the time-domain unit of the data channel includes at least one resource part for the data channel and at least one resource part belonging to the first frequency-domain resource. The time-domain unit is at least one of a frame, a subframe, a slot, a symbol set, or a symbol.

In some embodiments, the time frequency resource corresponding to the data channel includes at least one first resource part. In some embodiments, the time frequency resource corresponding to the data channel includes one first resource part and one second resource part, or, the time frequency resource corresponding to the data channel includes two first resource parts and one second resource part.

In some embodiments, the data channel is a downlink data channel, and in a case where the first frequency-domain resource is an unavailable frequency-domain resource, the number of second resource blocks includes at least one of: a number of resource blocks belonging to the uplink transmission resource in the number of first resource blocks, a number of resource blocks belonging to the guard sideband in the number of first resource blocks, a number of resource blocks belonging to the sidelink transmission resource in the number of first resource blocks, or a number of resource blocks belonging to the undetermined resource in the number of first resource blocks.

In some embodiments, the data channel is an uplink data channel, and in a case where the first frequency-domain resource is an unavailable frequency-domain resource of the data channel, the number of second resource blocks includes at least one of: a number of resource blocks belonging to the downlink transmission resource in the number of first resource blocks, a number of resource blocks belonging to the guard sideband in the number of first resource blocks, a number of resource blocks belonging to the sidelink transmission resource in the number of first resource blocks, or a number of resource blocks belonging to the undetermined resource in the number of first resource blocks.

In some embodiments, the data channel is a first sidelink channel, and in a case where the first frequency-domain resource is an unavailable frequency-domain resource of the data channel, the number of second resource blocks includes at least one of: a number of resource blocks belonging to the second sidelink transmission resource in the number of first resource blocks, a number of resource blocks belonging to the guard sideband in the number of first resource blocks, a number of resource blocks belonging to the uplink transmission resource in the number of first resource blocks, a number of resource blocks belonging to the downlink transmission resource in the number of first resource blocks, or a number of resource blocks belonging to the undetermined resource in the number of first resource blocks.

The transmission direction of the second sidelink transmission resource is not coincident with the transmission direction of a first sidelink transmission resource, and the first sidelink transmission resource is a sidelink resource corresponding to the first sidelink channel.

In some embodiments, as illustrated in FIG. 12, the time frequency resource corresponding to the data channel includes one first resource part and one second resource part. That is, the frequency-domain resource corresponding to the time-domain unit of the data channel includes one resource part for the data channel and one resource part belonging to the first frequency domain resource.

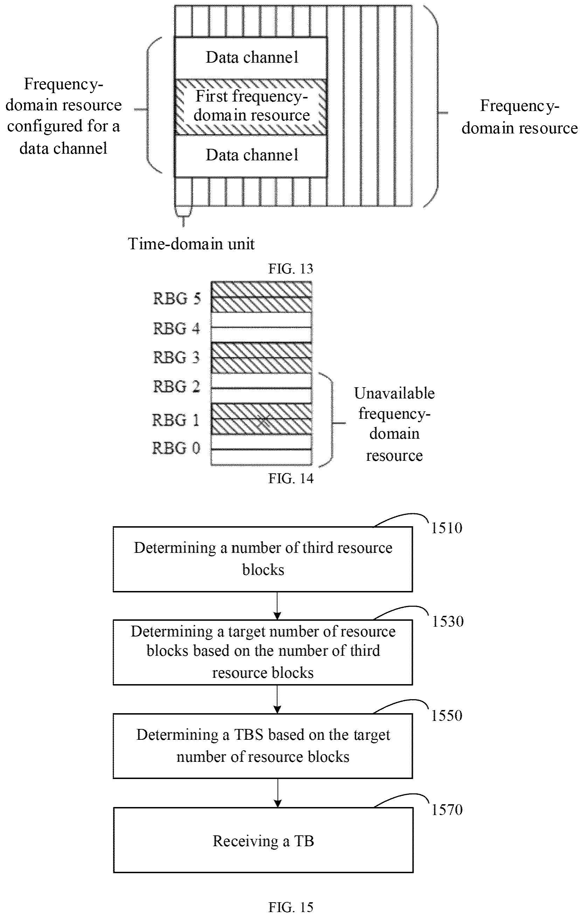

In some embodiments, as illustrated in FIG. 13, the time frequency resource corresponding to the data channel includes two first resource parts and one second resource part. That is, the frequency-domain resource corresponding to the time-domain unit of the data channel includes two resource parts for the data channel and one resource part belonging to the first frequency domain resource.

The time-domain unit configured for the data channel includes the second resource or does not include the second resource.

The target number of resource blocks is determined based on at least one of the number of first resource blocks, the number of second resource blocks, the number of first time-domain units, or the number of second time-domain units in at least one of the following cases.

· The target number of resource blocks is determined based on a difference between the number of first resource blocks and the number of second resource blocks.
· The target number of resource blocks is determined based on the number of first resource blocks, the number of second resource blocks, the number of first time-domain units, and the number of second time-domain units.
· The target number of resource blocks is determined based on a ratio of the number of first time-domain units to the number of second time-domain units.

In some embodiments, the target number of resource blocks is determined based on one of:

a sum of a product of the number of first resource blocks and a first difference and a product of a second difference and a second ratio, that is, the target number of resource blocks is equal to $N1 \times (1-A) + (N1-N2) \times A$;
a sum of a second difference and a product of the number of second resource blocks and a first difference, that is, the target number of resource blocks is equal to $(N1-N2) + N2 \times (1-A)$; or
a sum of the number of first resource blocks and a product of the number of second resource blocks and a second ratio, that is, the target number of resource blocks is equal to $N1 - N2 \times A$.

The first difference is an absolute value of a difference between 1 and the second ratio A. The second ratio A is a ratio of the number of second time-domain units to the number of first time-domain units, that is, the second ratio is equal to the number of second time-domain units/the number of first time-domain units. The second difference is an absolute value of the difference between the number $N1$ of first resource blocks and the number $N2$ of second resource blocks, that is, $|N1 - N2|$. | | represents an absolute value.

Illustratively, the time-domain unit configured for the data channel does not include the second resource. As illustrated in FIG. 14, the terminal device 420 receives the DCI of the scheduling PDSCH transmitted by the network device 410 to indicate that three RBGs are allocated to the PDSCH. The three RBGs are RBG 1, RBG 3, and RBG 5. Assuming that each RBG includes two PRBs, then the number $N_1$ of first resource blocks is equal to a product of 3 and 2, that is, 6. In some embodiments, an RBG includes four, six, or eight PRBs, and numbers of PRBs in various RBGs are the same or different. One RBG is in the unavailable resource part (for example, the uplink frequency-domain resource part, or the uplink frequency-domain resource part and the guard sideband part), and then the number $N_2$ of second resource blocks is equal to a product of 1 and 2, that is, 2, and the target number of resource blocks is determined based on the difference between the number of first resource blocks and the number of second resource blocks, that is, $n_{pas}=N_1-N_2=6-2=4$.

Illustratively, the time-domain unit configured for the data channel includes the second resource. As illustrated in FIG. 10, the terminal device 420 receives the DCI of the scheduling PDSCH transmitted by the network device 410 to indicate that six RBGs are allocated to the PDSCH. The number of symbols corresponding to the PDSCH (that is, the number of first time-domain units) is 11, and then the number $N_1$ of first resource blocks is equal to 6, and the number $M_1$ of first time-domain units is 11. Two PRBs are in the second resource part (for example, the uplink frequency-domain resource part, or the uplink frequency-domain resource part and the guard sideband part), and then the number of symbols corresponding to the second resource part is 7, and the number $M_2$ of second time-domain units is equal to 7.

The number of second time-domain units is determined based on a product of a sum of the number of PRBs in the first frequency-domain resource part and the second ratio. The second ratio is a ratio of the number of symbols corresponding to the second resource part and the number of symbols corresponding to the data channel. That is, $N_2 =2\times7/11 \approx 1.2727$. Then the target number of resource blocks is determined based on the difference between the number of first resource blocks and the number of second resource blocks, that is, $n_{PRB}=N_1-N_2=6-1.2727=4.7273$.

Alternatively, the target number of resource blocks is determined based on a product of a sum of the number of PRBs in the downlink frequency-domain resource part and the number of PRBs in the second resource part and the first difference. The first difference is an absolute value of a difference between 1 and the second ratio, and the second ratio is a ratio of the number of symbols corresponding to the second resource part and the number of symbols corresponding to the data channel. That is, $n_{PRB}=4+2 \times (1-7/11)\approx4.7273$.

Alternatively, the target number of resource blocks is determined based on a product of the number of PRBs in the downlink frequency-domain resource part and the second ratio and a product of the number of PRBs configured for the data channel and the first difference. The second ratio is a ratio of the number of symbols corresponding to the second resource part and the number of symbols corresponding to the data channel, and the first difference is an absolute value of a difference between 1 and the second ratio. That is, $n_{PRB}=4 \times \frac{7}{11} + 6 \times \left(1-\frac{7}{11}\right) \approx 4.7273$ .

By rounding up, $n_{PRB}=5$. by rounding down, $n_{PRB}=4$.
**In 1130,** the TBS is determined based on the target number of resource blocks.
In some embodiments, the number of REs in the data channel is determined based on the target number of resource blocks, the amount of intermediate information carried over the data channel is determined based on the number of REs in the data channel, and the TBS is determined based on the amount of intermediate information carried over the data channel by quantitative table lookup or quantitative calculation.
In some embodiments, the amount of intermediate information carried over the data channel refers to an amount of intermediate information that may be carried over the data channel, and is not limited to an amount of intermediate information that is must carried over the data channel.

In some embodiments, the TBS is determined based on at least one of a modulation mode of the data channel, a number of transmission layers of the data channel, a bit rate of the data channel, or a number of REs in the data channel.

In some embodiments, the TBS is determined based on the modulation mode of the data channel, the number of transmission layers of the data channel, the bit rate of the data channel, and the number of REs in the data channel.

In some embodiments, the method for determining the TBS based on the target number of resource blocks includes the following processes.

(1) A number $N'_{RE}$ of REs in a resource block is calculated using the formula:

$$N'_{RE} = N^{RB}_{sc} \times N^{sh}_{symb} - N^{PRB}_{DMRS} - N^{PRB}_{oh} .$$

$N^{RB}_{sc}$ is equal to 12, and represents the number of subcarriers in the RB, $N^{sh}_{symb}$ represents the number of symbols occupied by the PDSCH in the slot, $N^{PRB}_{DMRS}$ represents the number of REs occupied by the DMRS in the PRB, and $N^{PRB}_{oh}$ represents the number of overhead REs configured in the PRB. The number of overhead REs includes the number of REs occupied by control information such as the synchronization channel, the PBCH, the PDCCH, the PUCCH, and the like.

(2) A total number $N_{RE}$ of REs in the data channel is determined based on the target number of resource blocks using the formula: $N_{RE} = min(156, N'_{RE}) \times n_{PRB} .$

$N_{PRB} = N_2$, $N_{PRB}$ is calculated in 1120, and represents the target number of resource blocks.

(3) An amount $N_{info}$ of intermediate information carried over the data channel is calculated based on the total number $N_{RE}$ of REs in the data channel using the formular: $N_{info} = N_{RE} \times R \times Q_m \times \upsilon.$

$N_{RE}$ represents the calculated total number of REs in the data channel, R represents the bit rate of data transmission over the data channel, $Q_m$ represents the modulation order of data on the data channel, and $\upsilon$ represents the number of transmission layers of the data channel.

(4) The TBS is determined based on the amount $N_{info}$ of intermediate information carried over the data channel.

The TBS is determined by quantitative table lookup in a case where $N_{info}$ is less than or equal to 3824.

The TBS is determined by quantitative calculation in a case where $N_{info}$ is greater than 3824.

In some embodiments, the TBS is determined by table lookup or calculation in the protocol in the 3GPP (for example, Section 5.1.3.2 of TS 38.214, version 17.2.0).

**In 1150,** the transport block is received.

The TBS is a TBS determined based on the target number of resource blocks.

For detailed description of 1150, reference may be made to 650 in the above embodiments, which is not described herein any further.

In summary, in the method according to the present disclosure, the TBS is determined based on at least one of the number of first resource blocks, the number of second resource blocks, the number of first time-domain units, or the number of second time-domain units. As the target number of resource blocks determined based on the number of second resource blocks is closer to the number of resource blocks actually used in the data transmission, the determined TBS is closer to the TBS actually used in the data transmission, the configured bit rate is closer to the actual bit rate, and the reliability of data transmission is improved. In addition, as the number of first resource blocks and the number of second resource blocks are dynamically or semi-persistently configured, the flexibility of data transmission is improved. Based on various methods of extreme target numbers of resource blocks, the method according to the embodiments is applicable to different communication scenarios, such that the flexibility of the method for determining the target number of resource blocks is improved. In addition, the first frequency-domain resource includes the guard sideband or does not include the guard sideband, such that the utilization of resources is improved, and the flexibility of the data transmission is improved.

**In Type 3:** Repetitive transmission is performed on a transport block, and the target number of resource blocks is determined based on a number of third resource blocks.

FIG. 15 is a schematic flowchart of a method for determining a TBS according to some embodiments of the present disclosure. The method is illustrated using an example where the method is performed by the network device 410, the terminal device 420, or the terminal device 430 shown in FIG. 4. The method includes at least part of the following processes.

**In 1510,** a number of third resource blocks is determined.

Repetitive transmission is performed on a transport block, and a number of resource blocks corresponding to each transmission in the repetitive transmission is the number of third resource blocks corresponding to each transmission. The number of third resource blocks is determined based on Type 1 or Type 2.

That is, in a case where the first frequency-domain resource is an available frequency-domain resource, the number of third resource blocks is determined based on the number of second resource blocks, and as illustrated in the embodiments in FIG. 6, which is not described herein any further. In a case where the first frequency-domain resource is an unavailable frequency-domain resource, the number of third resource blocks is determined based on at least one of the number of first resource blocks, the number of second resource blocks, the number of first time-domain units, or the number of second time-domain units, and as illustrated in the embodiments in FIG. 11, which is not described herein any further.

**In 1530,** the target number of resource blocks is determined based on the number of third resource blocks.

The target number of resource blocks is determined based on at least one of:

a number of third resource blocks corresponding to a first transmission in the repetitive transmission;
numbers of third resource blocks corresponding to at least two transmissions in the repetitive transmission;
a minimum number in numbers of third resource blocks corresponding to at least two transmissions in the repetitive transmission;
a maximum number in numbers of third resource blocks corresponding to at least two transmissions in the repetitive transmission;
an average value of numbers of third resource blocks corresponding to at least two transmissions in the repetitive transmission;
a median value of numbers of third resource blocks corresponding to at least two transmissions in the repetitive transmission.

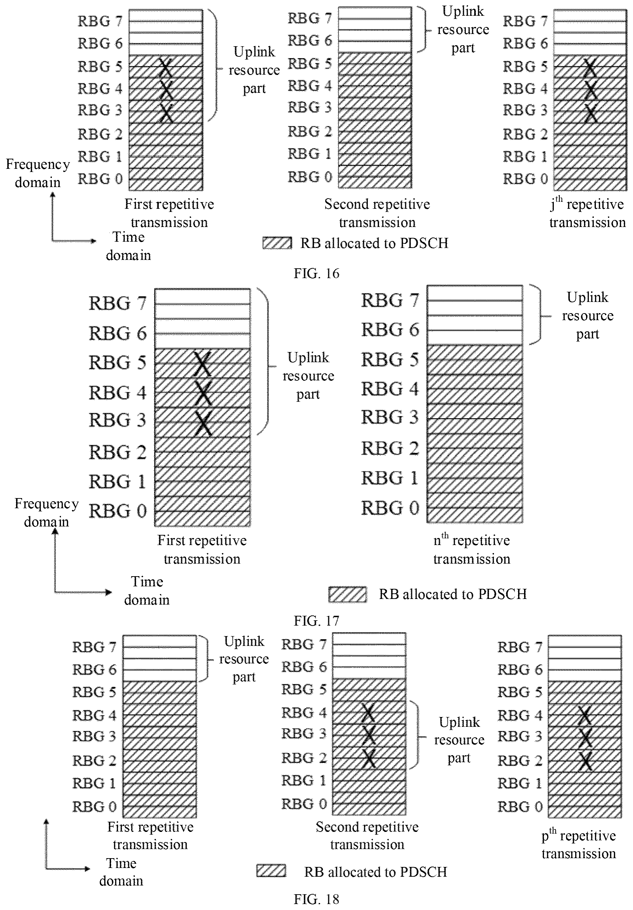

Illustratively, the target number of resource blocks is determined based on the number of third resource blocks corresponding to the first transmission in the repetitive transmission. As illustrated in FIG. 16, the terminal device 420 receives the DCI of the scheduling PDSCH transmitted by the network device 410 to indicate that six RBGs are allocated to the PDSCH. The six RBGs are RBG 0, RBG 1, RBG 2, RBG 3, RBG 4, and RBG 5. Assuming that each RBG includes two PRBs, then $N_1$=6 x 2=12. In some embodiments, an RBG includes four, six, or eight PRBs, and numbers of PRBs in various RBGs are the same or different. In the first transmission in the repetitive transmission, three RBGs are in the uplink resource part, and the number $N_{3,1}$ of third resource blocks in the first transmission is equal to a product of 3 and 2, that is, 6. In the following m (m is an integer greater than 1) transmissions in the repetitive transmission, the number of PRBs in the uplink resource part in the six RBGs is not necessary 6 in each transmission. For example, in the second transmission in the repetitive transmission, the number of PRBs in the uplink resource part in the six RBGs is 0, and thus the target number of resource blocks is determined based on the number of third resource blocks in the first transmission in the repetitive transmission in the $j^{th}$ transmission in the repetitive transmission. That is, $n_{PRB}=N_{3,1}$=6. $1 \leqslant j \leqslant m$, and j is an integer. In the calculation method, the transport blocks in various transmissions in the repetitive transmission have the same size, and thus repetitive gains are acquired. In addition, as the first transmission in the repetitive transmission is generally configured by the network device, and the network device controls resources in the first transmission in the repetitive transmission, the target number of resource blocks is determined based on the number of first resource blocks and the number of second resource blocks in the first transmission in the repetitive transmission, such that the desired effect of the network device in the repetitive transmission is achieved.

Illustratively, the target number of resource blocks is determined based on the numbers of third resource blocks corresponding to at least two transmissions in the repetitive transmission. As illustrated in FIG. 17, the terminal device 420 receives the DCI of the scheduling PDSCH transmitted by the network device 410 to indicate that six RBGs are allocated to the PDSCH. The six RBGs are RBG 0, RBG 1, RBG 2, RBG 3, RBG 4, and RBG 5. Assuming that each RBG includes two PRBs, then $N_1$=6 x 2=12. In some embodiments, an RBG includes four, six, or eight PRBs, and numbers of PRBs in various RBGs are the same or different. In the first transmission in the repetitive transmission, three RBGs are in the uplink resource part, and the number $N_{3,1}$ of third resource blocks in the first transmission is equal to a product of 3 and 2, that is, 6. In the following m (m is an integer greater than 1) transmissions in the repetitive transmission, the number of PRBs in the uplink resource part in the six RBGs is not necessary 6 in each transmission. For example, in the $n^{th}$ transmission in the repetitive transmission, the number of PRBs in the uplink resource part in the six RBGs is 0, and thus the number $N_{3,2}$ of third resource blocks in the $n^{th}$ transmission is 0 That is, in the $n^{th}$ transmission in the repetitive transmission, 12 PRBs in the six RBGs are used to carry data on the PDSCH. In the calculation method, as the first transmission in the repetitive transmission is generally configured by the network device, and the network device controls resources in the first transmission in the repetitive transmission, the target number of resource blocks is determined based on the number of first resource blocks and the number of second resource blocks in the first transmission and the first frequency-domain resource in the time-domain unit in the current transmission, such that the frequency-domain resource is managed accurately and flexibly, and the desired effect of the network device in the repetitive transmission is achieved.

Illustratively, the target number of resource blocks is determined based on the minimum number in the numbers of third resource blocks corresponding to at least two transmissions in the repetitive transmission. As illustrated in FIG. 18, the terminal device 420 receives the DCI of the scheduling PDSCH transmitted by the network device 410 to indicate that six RBGs are allocated to the PDSCH. The six RBGs are RBG 0, RBG 1, RBG 2, RBG 3, RBG 4, and RBG 5. It is assumed that in the first transmission in the repetitive transmission, 0 RBG is in the uplink resource part, that is, the number $N_{3,1}$ of third resource blocks in the first transmission is 0; and in the second transmission in the repetitive transmission, three RBGs are in the uplink resource part, that is, the number $N_{3,2}$ of third resource blocks in the second transmission is equal to a product of 3 and 2, that is, 6. For the following m (m is an integer greater than 1) transmissions in the repetitive transmission, in the p$^{th}$ transmission in the repetitive transmission, as min{12,6}=6, the number of third resource blocks in the second transmission in the repetitive transmission is less than the number of third resource blocks in the first transmission in the repetitive transmission, and the number of third resource blocks in the second transmission in the repetitive transmission is determined as the target number of resource blocks in the p$^{th}$ transmission. That is, $n_{PRB}$=min {12,6}=6. 2≤p≤m, and p is an integer. In the calculation method, the TBS is determined based on the minimum number of third resource blocks corresponding to at least two transmissions in the repetitive transmission, such that the same frequency-domain resource is used for data transmission in various transmissions in the repetitive transmission, the complexity of the data transmission is reduced, and the simplicity of the data transmission is improved.

For the process of determining the target number of resource blocks based on the maximum number in the numbers of third resource blocks corresponding to at least two transmissions in the repetitive transmission, the average value of the numbers of third resource blocks corresponding to at least two transmissions in the repetitive transmission, or the median value of the numbers of third resource blocks corresponding to at least two transmissions in the repetitive transmission, reference may be made to the embodiments illustrated in FIG. 18, which is not described herein any further.

**In 1550,** the TBS is determined based on the target number of resource blocks.

For related description of 1550, reference may be made to 630 or 1130 in above embodiments, which is not described herein any further.

**In 1570,** the TBS is received.

The TBS is a TBS determined based on the target number of resource blocks.

For related description of 1570, reference may be made to 650 in above embodiments, which is not described herein any further.

In summary, in the method according to the embodiments, the target number of resource blocks is determined based on the number of third resource blocks, and the TBS is determined based on the target number of resource blocks, such that the same frequency-domain resource is used for data transmission in various transmissions in the repetitive transmission, the frequency-domain resource in the current transmission is used for data transmission, and the minimum number, the maximum number, the average value, or the median value of the numbers of third resource blocks corresponding to at least two transmissions in the repetitive transmission is used for data transmission. Thus, the complexity of determining the target number of resource blocks is reduced, the simplicity of the data transmission is improved, the frequency-domain resource is used flexibly and accurately, repetitive gains are acquired, the accuracy of data transmission is improved, and unnecessary resource waste is reduced.

As the target number of resource blocks determined based on the numbers of first resource blocks and the numbers of second resource blocks in at least two transmission in the repetitive transmission is closer to the number of resource blocks actually used in the data transmission, the determined TBS is closer to the TBS actually used in the data transmission, the configured bit rate is closer to the actual bit rate, and the reliability of data transmission is improved. In addition, as the number of first resource blocks and the number of second resource blocks are dynamically or semi-persistently configured, the flexibility of data transmission is improved.

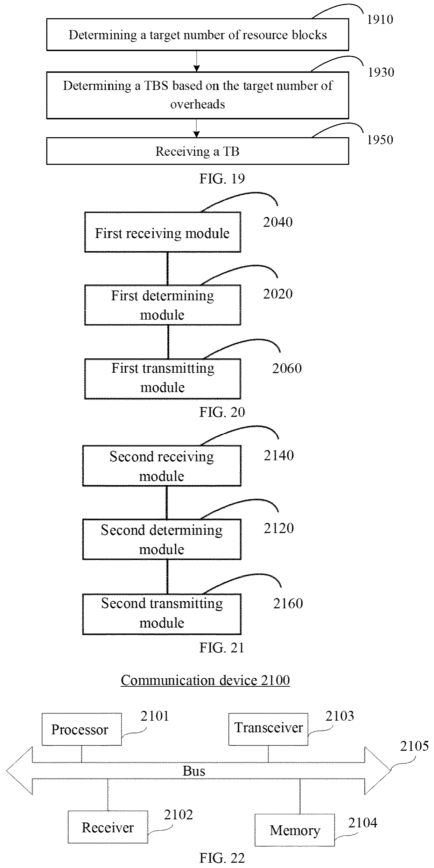

FIG. 19 is a schematic flowchart of a method for determining a TBS according to some embodiments of the present disclosure. The method is illustrated using an example where the method is performed by the network device 410, the terminal device 420, or the terminal device 430 shown in FIG. 4. The method includes at least part of the following processes.

**In 1910,** a target number of resource blocks is determined.

The target number of resource blocks is determined based on the number of first resource blocks.

The number of first resource blocks is the number of resource blocks configured for the data channel. The data channel is a downlink data channel (for example, a PDSCH), the uplink data channel (for example, a PUSCH), or the sidelink data channel.

In some embodiments, the number of first resource blocks is a number of resource blocks dynamically configured for the data channel. For example, the number of first resource blocks is dynamically configured for the terminal device based on downlink control information (DCI).

In some embodiments, the number of first resource blocks is indicated by a frequency-domain resource indication field in a DCI format 1-0, a DCI format 1-1, or a DCI format 1-2.

In some embodiments, the number of first resource blocks is a number of resource blocks semi-persistently configured for the data channel. In some embodiments, the number of first resource blocks is indicated by activating a frequency-domain resource indication field in a DCI format 1-0, a DCI format 1-1, or a DCI format 1-2 in semi-persistent scheduling (SPS).

In some embodiments, the first frequency-domain resource is configured by the network device.

In some embodiments, the first frequency-domain resource is dynamically or semi-persistently configured.

In some embodiments, the transmission direction of the frequency-domain resource occupied by the data channel is coincident with the data transmission direction on the first frequency-domain resource. For example, in a case where the data channel is a downlink data channel, the downlink transmission is performed on the first frequency-domain resource; in a case where the data channel is an uplink data channel, the uplink transmission is performed on the first frequency-domain resource; or, in a case where the data channel is a first sidelink channel, the first sidelink transmission is performed on the first frequency-domain resource.

In some embodiments, the transmission direction of the frequency-domain resource occupied by the data channel is not coincident with the data transmission direction on the first frequency-domain resource. That is, the data channel is not coincident with the data transmission direction on the first frequency-domain resource. For example, in a case where the data channel is a downlink data channel, the uplink transmission or the sidelink transmission is performed on the first frequency-domain resource; in a case where the data channel is an uplink data channel, downlink transmission or sidelink transmission is performed on the first frequency-domain resource; or, in a case where the data channel is a first sidelink channel, uplink transmission or the downlink transmission or the second sidelink transmission is performed on the first frequency-domain resource.

In some embodiments, the first frequency-domain resource does not include a guard sideband, or the first frequency-domain resource includes a guard sideband.

In some embodiments, the guard sideband is configured by the network device, determined based on a capability of the terminal device, or configured by the network device based on a report capability of the terminal device.

In some embodiments, the guard sideband is dynamically or semi-persistently configured.

For related description of the data channel, reference may be made to 610, 1110, 1530, which is not described herein any further.

In some embodiments, the frequency-domain resource corresponding to the time-domain unit of the data channel includes at least one resource part for the data channel or at least one resource part for the data channel and at least one resource part belonging to the first frequency-domain resource. The time-domain unit is at least one of a frame, a subframe, a slot, a symbol set, or a symbol.

In some embodiments, the time frequency resource corresponding to the data channel includes at least one first resource part. In some embodiments, the time frequency resource corresponding to the data channel includes one first resource part and one second resource part, or, the time frequency resource corresponding to the data channel includes two first resource parts and one second resource part.

The time-domain unit configured for the data channel includes the second resource or does not include the second resource.

In some embodiments, the first resource part includes at least one of an available resource, a guard sideband, or an undetermined resource. The undetermined resource is a time frequency resource with an undetermined transmission direction.

In some embodiments, the second resource part includes at least one of an unavailable resource, a guard sideband, or an undetermined resource. The undetermined resource is a time frequency resource with an undetermined transmission direction.

**In 1930,** the TBS is determined based on a target number of overheads.

In some embodiments, the number of REs in the data channel is determined based on the target number of overheads, the amount of intermediate information carried over the data channel is determined based on the number of REs in the data channel, and the TBS is determined based on the amount of intermediate information carried over the data channel by quantitative table lookup or quantitative calculation.

In some embodiments, the amount of intermediate information carried over the data channel refers to an amount of intermediate information that may be carried over the data channel, and is not limited to an amount of intermediate information that is must carried over the data channel.

In some embodiments, the TBS is determined based on at least one of a modulation mode of the data channel, a number of transmission layers of the data channel, a bit rate of the data channel, or a number of REs in the data channel.

In some embodiments, the TBS is determined based on the modulation mode of the data channel, the number of transmission layers of the data channel, the bit rate of the data channel, and the number of REs in the data channel.

In some embodiments, the method for determining the TBS based on the target number of overheads includes the following processes.

(1) The number $N'_{RE}$ of REs in a resource block is calculated using the formula:

$$N'_{RE} = N_{sc}^{RB} \times N_{symb}^{sh} - N_{DMRS}^{PRB} - N_{oh}^{PRB} \ .$$

$N_{sc}^{RB}$ is equal to 12, and represents the number of subcarriers in the RB, $N_{symb}^{sh}$ represents the number of symbols occupied by the PDSCH in the slot, $N_{DMRS}^{PRB}$ represents the number of REs occupied by the DMRS in the PRB, and $N_{oh}^{PRB}$ represents the number of overhead REs configured in the PRB. The number of overhead REs includes the number of REs occupied by control information such as the synchronization channel, the PBCH, the PDCCH, the PUCCH, and the like. $N_{oh}^{PRB}$ includes a number of first overheads and/or a number of second overheads. The number of first overheads is different from the number of second overheads.

In some embodiments, the number of first overheads is associated with the available resource, and the number of second overheads is associated with the unavailable resource.

In some embodiments, the number of first overheads is associated with the first resource, and the number of second overheads is associated with the second resource.

In some embodiments, the number of second overheads is greater than the number of first overheads.

In some embodiments, the number of first overheads is used to determine the TBS based on the target number of resource blocks and the number of first overheads in a case where the time-domain unit allocated for the data channel does not include the second resource. The time-domain unit allocated for the data channel refers to a time-domain unit corresponding to the data channel or a time-domain unit configured for the data channel. The time-domain unit allocated by the data channel refers to a time-domain unit configured for the data channel.

In some embodiments, the number of second overheads is used to determine the TBS based on the target number of resource blocks and the number of second overheads in a case where the time-domain unit allocated for the data channel includes the second resource.

In some embodiments, the number of first overheads and the number of second overheads are used to determine the TBS based on the target number of resource blocks, the number of first overheads, and the number of second overheads in a case where the time-domain unit allocated by the data channel includes the second resource.

The number of first overheads is configured by the network device, or is predefined in a communication protocol.

The number of second overheads is configured by the network device, or is predefined in a communication protocol, or is determined based on a number of resource blocks.

In some embodiments, the network device configures a set of first overheads for the terminal device, and the number of first overheads is determined based on the set of first overheads.

In some embodiments, the network device configures a set of second overheads for the terminal device, and the number of second overheads is determined based on the set of second overheads.

A number of set elements in the set of first overheads is the same as or different from a number of set elements in the set of second overheads.

In some embodiments, the number of second overheads is determined based on a product of a number of available REs and a first ratio, or, the number of second overheads is determined based on a sum of a product of a number of available REs and a first ratio and the number of first overheads. The number of available REs is a number of available REs in a resource block, and the first ratio is a ratio of a number of second resource blocks to a number of first resource blocks. The number of second resource blocks includes a number of resource blocks belonging to a first frequency-domain resource in the number of first resource blocks, and the number of first resource blocks is a number of resource blocks configured for a data channel.

In some embodiments, the number of second overheads is determined based on a product of a number of available REs and a first value. The number of available REs is a number of available REs in a resource block. In some embodiments, the first value is a positive value less than 1, for example, any one of {1/5,2/5,3/5,4/5}.

The number of available REs is a number of available REs actually used in a resource block or a number of available REs approximately actually used in a resource block, and is associated with scheduling in dynamic scheduling and the time frequency resource in actual usage.

A case where the target number of overheads includes the number of first overheads.

Illustratively, the time-domain unit allocated for the data channel does not include the second resource. The network device configures the set of first overheads and the set of second overheads for the terminal device, the set of first overheads is {0,6,12,18}, the set of second overheads is {34,68,102,136}, the number $N_{oh}^{PRB},1$ of first overheads is any value in the set of first overheads (for example, $N_{oh}^{PRB},1 = 12$), and the number $N_{oh}^{PRB},2$ of first overheads is any value in the set of second overheads (for example, $N_{oh}^{PRB},2 = 34$ ).

As the time-domain unit allocated for the data channel does not include the second resource, the number $N_{oh}^{PRB},1$ of first overheads is used to calculate $N_{RE}'$. That is, $N_{oh}^{PRB} = N_{oh}^{PRB},1 = 12$ .

A case where the target number of overheads includes the number of second overheads.

Illustratively, as illustrated in FIG. 10, the time-domain unit allocated for the data channel includes the second resource. The network device configures the set of first overheads and the set of second overheads for the terminal device, the set of first overheads is {0,6,12,18}, the set of second overheads is {34,68,102,136}, the number $N_{oh}^{PRB}, 1$ of first overheads is any value in the set of first overheads (for example, $N_{oh}^{PRB}, 1 = 18$ ), and the number $N_{oh}^{PRB}, 2$ of first overheads is any value in the set of second overheads (for example, $N_{oh}^{PRB}, 2 = 68$ ).

As the time-domain unit allocated for the data channel includes the second resource, the number $N_{oh}^{PRB}, 2$ of second overheads is used to calculate $N_{RE}'$ . That is, $N_{oh}^{PRB} = N_{oh}^{PRB}, 2 = 68$ .

A case where the target number of overheads includes the number of first overheads and the number of second overheads.

Illustratively, as illustrated in FIG. 10, the time-domain unit allocated for the data channel includes the second resource. The network device configures the set of first overheads and the set of second overheads for the terminal device, the set of first overheads is {0,6,12,18}, the set of second overheads is {34,68,102,136}, the number $N_{oh}^{PRB}, 1$ of first overheads is any value in the set of first overheads (for example, $N_{oh}^{PRB}, 1 = 12$ ), and the number $N_{oh}^{PRB}, 2$ of first overheads is any value in the set of second overheads (for example, $N_{oh}^{PRB}, 2 = 68$ ).

As the time-domain unit allocated for the data channel includes the second resource, the number $N_{oh}^{PRB}, 1$ of first overheads and the number $N_{oh}^{PRB}, 2$ of second overheads is used to calculate $N_{RE}'$ . That is, $N_{oh}^{PRB} = N_{oh}^{PRB}, 1 + N_{oh}^{PRB}, 2 = 12 + 68 = 80$ .

(2) A total number $N_{RE}$ of REs in the data channel is determined based on the target number of resource blocks using the formula: $N_{RE} = min(156, N_{RE}') \times n_{PRB}$ .

$N_{PRB} = N_1$, $N_{PRB}$ represents the target number of resource blocks, and $N_1$ represents the number of first resource blocks.

(3) An amount $N_{info}$ of intermediate information carried over the data channel is calculated based on the total number $N_{RE}$ of REs in the data channel using the formular: $N_{info} = N_{RE} \times R \times Q_m \times \upsilon$.

$N_{RE}$ represents the calculated total number of REs in the data channel, R represents the bit rate of data transmission over the data channel, $Q_m$ represents the modulation order of data on the data channel, and $\upsilon$ represents the number of transmission layers of the data channel.

(4) The TBS is determined based on the amount $N_{info}$ of intermediate information carried over the data channel.

The TBS is determined by quantitative table lookup in a case where $N_{info}$ is less than or equal to 3824.

The TBS is determined by quantitative calculation in a case where $N_{info}$ is greater than 3824.

In some embodiments, the TBS is determined by table lookup or calculation in the protocol in the 3rd Generation Partnership Project (3GPP) (for example, Section 5.1.3.2 of TS 38.214, version 17.2.0).

**In 1950,** the transport block is received.

The TBS is a TBS determined based on the target number of resource blocks.

For detailed description of 1950, reference may be made to 650 in the above embodiments, which is not described herein any further.

In summary, in the method according to the present disclosure, the TBS is determined based on the number of first overheads and/or the number of second overheads by determining whether the time-domain unit corresponding to the data channel includes the second resource. The method has the great simplicity, the determined TBS is closer to the TBS actually used in the data transmission, the configured bit rate is closer to the actual bit rate, and the reliability of data transmission is improved. In addition, as the number of first resource blocks and the number of second resource blocks are dynamically or semi-persistently configured, the flexibility of data transmission is improved. In addition, the first frequency-domain resource includes the guard sideband or does not include the guard sideband, such that the utilization of resources is improved, and the flexibility of the data transmission is improved.

**A case of determining the TBS in repetitive transmission of the transport block**

The repetitive transmission is performed on the transport block, and the TBS corresponding to each transmission in the repetitive transmission is a first TBS corresponding to each transmission. The first TBS is determined based on Type 1, Type 2, or the related process in 1930.

The TBS is determined based on at least one of:

a first TBS corresponding to a first transmission in the repetitive transmission;
first TBSs corresponding to at least two transmissions in the repetitive transmission;
a minimum number in first TBSs corresponding to at least two transmissions in the repetitive transmission;
a maximum number in first TBSs corresponding to at least two transmissions in the repetitive transmission;
an average value of first TBSs corresponding to at least two transmissions in the repetitive transmission; or

a median value of first TBSs corresponding to at least two transmissions in the repetitive transmission.

Illustratively, the TBS is determined based on the first TBS in the first transmission in the repetitive transmission. The first TBS in the first transmission is determined based on the number of first overheads and/or the number of second overheads. In the $j^{th}$ transmission in the repetitive transmission, the TBS is equal to the first TBS in the first transmission, and j is an integer greater than or equal to 1. In the calculation method, the transport blocks in various transmissions in the repetitive transmission have the same size, and thus repetitive gains are acquired. In addition, as the first transmission in the repetitive transmission is generally configured by the network device, and the network device controls resources in the first transmission in the repetitive transmission, the TBS in the $j^{th}$ transmission is determined based on the first TBS in the first transmission in the repetitive transmission, such that the desired effect of the network device in the repetitive transmission is achieved.

Illustratively, the TBS is determined based on the first TBSs corresponding to at least two transmissions in the repetitive transmission. For example, in the first transmission in the repetitive transmission, the first TBS is determined as 4 based on the number of first overheads; and in the $j^{th}$ transmission in the repetitive transmission, the first TBS is determined as 2 based on the number of second overheads. j is an integer greater than or equal to 1. The TBS in the $j^{th}$ transmission is 2. In the calculation method, as the first transmission in the repetitive transmission is generally configured by the network device, and the network device controls resources in the first transmission in the repetitive transmission, the TBS is determined based on the TBS in the first transmission and the configuration of time frequency resource in the current transmission, such that the frequency-domain resource is managed accurately and flexibly, and the desired effect of the network device in the repetitive transmission is achieved.

Illustratively, the TBS is determined based on the minimum number in the first TBSs corresponding to at least two transmissions in the repetitive transmission. For example, in the first transmission in the repetitive transmission, the first TBS is determined as 4 based on the number of first overheads; in the second transmission in the repetitive transmission, the first TBS is determined as 2 based on the number of second overheads; and in the $p^{th}$ transmission in the repetitive transmission, the TBS is determined as 2 based on min{4,2}. p is an integer greater than or equal to 2. In the calculation method, the TBS is determined based on the minimum first TBS in at least two transmissions in the repetitive transmission, such that the same frequency-domain resource is used for data transmission in various transmissions in the repetitive transmission, the complexity of the data transmission is reduced, and the simplicity of the data transmission is improved.

FIG. 20 is a block diagram of an apparatus for determining a TBS according to some embodiments of the present disclosure. The apparatus includes at least part of a first determining module 2020, a first receiving module 2040, or a first transmitting module 2060.

The first determining module 2020 is configured to determine the TBS based on a target number of resource blocks, wherein the target number of resource blocks is determined based on at least one of a number of first resource blocks, a number of second resource blocks, a number of first time-domain units, or a number of second time-domain units, wherein the number of first resource blocks is a number of resource blocks configured for a data channel, the number of second resource blocks includes a number of resource blocks belonging to a first frequency-domain resource in the number of first resource blocks, the number of first time-domain units is a number of time-domain units corresponding to the data channel, and the number of second time-domain units includes a number of time-domain units corresponding to the first frequency-domain resource in the number of first time-domain units.

In some embodiments, the first frequency-domain resource is an available frequency-domain resource corresponding to the data channel.

In some embodiments, the first determining module 2020 is further configured to determine the target number of resource blocks based on the number of second resource blocks.

In some embodiments, the target number of resource blocks is the number of second resource blocks.

In some embodiments, the first frequency-domain resource is an unavailable frequency-domain resource corresponding to the data channel.

In some embodiments, the first determining module 2020 is further configured to: determine the target number of resource blocks based on a difference between the number of first resource blocks and the number of second resource blocks; or determine the target number of resource blocks based on the number of first resource blocks, the number of second resource blocks, the number of first time-domain units, and the number of second time-domain units; or determine the target number of resource blocks based on a ratio of the number of first time-domain units to the number of second time-domain units.

In some embodiments, the first determining module 2020 is further configured to: determine the target number of resource blocks based on one of: a sum of a product of the number of first resource blocks and a first difference and a product of a second difference and a second ratio, a sum of a second difference and a product of the number of second resource blocks and a first difference, or a sum of the number of first resource blocks and a product of the number of second resource blocks and a second ratio, wherein the first difference is an absolute value of a difference between 1 and the second ratio, the second ratio is a ratio of the number of second time-domain units to the number of first time-domain units, and the second difference is an absolute value of the difference between the number of first resource blocks and the number of second resource blocks.

In some embodiments, repetitive transmission is performed on a transport block, wherein a number of resource blocks corresponding to each transmission in the repetitive transmission is a number of third resource blocks corresponding to the each transmission, and the first determining module 2020 is further configured to determine the target number of resource blocks based on at least one of: a number of third resource blocks corresponding to a first transmission in the repetitive transmission; numbers of third resource blocks corresponding to at least two transmissions in the repetitive transmission; a minimum number in numbers of third resource blocks corresponding to at least two transmissions in the repetitive transmission; a maximum number in numbers of third resource blocks corresponding to at least two transmissions in the repetitive transmission; an average value of numbers of third resource blocks corresponding to at least two transmissions in the repetitive transmission; or a median value of numbers of third resource blocks corresponding to at least two transmissions in the repetitive transmission.

In some embodiments, the first determining module 2020 is further configured to determine the TBS based on at least one of: the target number of resource blocks and a number first overheads; the target number of resource blocks and a number second overheads; the target number of resource blocks, a number first overheads, and a number second overheads, wherein the number second overheads is greater than the number first overheads.

In some embodiments, the first determining module 2020 is further configured to determine the TBS based on the target number of resource blocks and the number of first overheads in a case where the time-domain unit allocated for the data channel does not include the second resource.

In some embodiments, the first determining module 2020 is further configured to determine the TBS based on the target number of resource blocks and the number of second overheads in a case where the time-domain unit allocated for the data channel includes the second resource.

In some embodiments, the first determining module 2020 is further configured to determine the TBS based on the target number of resource blocks, the number of first overheads, and the number of second overheads in a case where the time-domain unit allocated by the data channel includes the second resource.

In some embodiments, the number of first overheads is configured by the network device, or is predefined in a communication protocol.

In some embodiments, the apparatus further includes the first receiving module 2040, configured to receive the number of first overheads configured by the network device.

In some embodiments, the apparatus further includes the first transmitting module 2060, configured to transmit the number of first overheads.

In some embodiments, the number of second overheads is configured by the network device, or is predefined in a communication protocol, or is determined based on a number of resource blocks.

In some embodiments, the first receiving module 2040 is further configured to receive the number of second overheads configured by the network device.

In some embodiments, the apparatus further includes the first transmitting module 2060, configured to transmit the number of second overheads.

In some embodiments, the first determining module 2020 is further configured to determine the number of second overheads based on the number of second resource blocks.

In some embodiments, the first determining module 2020 is further configured to determine the number of second overheads based on a product of a number of available REs and the number of second resource blocks, or based on a sum of a product of a number of available REs and the number of second resource blocks, and the number of first overheads, wherein the number of available REs is a number of available REs in a resource block.

In some embodiments, the first determining module 2020 is further configured to determine the number of first overheads based on a set of first overheads.

In some embodiments, the first determining module 2020 is further configured to determine the number of second overheads based on a set of second overheads, wherein number of set elements in the set of first overheads is the same as or different from a number of set elements in the set of second overheads.

In some embodiments, a time frequency resource corresponding to the data channel includes at least one first resource part.

In some embodiments, the time frequency resource corresponding to the data channel includes a second resource part and one of the at least one first resource part, or a second resource part and two of the at least one first resource part.

In some embodiments, the at least one first resource part is configured by the network device, or is predefined in a communication protocol.

In some embodiments, the second resource part is configured by the network device, or is predefined in a communication protocol.

In some embodiments, the first resource part includes at least one of an unavailable resource, a guard sideband, or an undetermined resource, wherein the undetermined resource is a time frequency resource with an undetermined transmission direction.

In some embodiments, the second resource part includes at least one of an unavailable resource, a guard sideband, or an undetermined resource, wherein the undetermined resource is a time frequency resource with an undetermined transmission direction.

In some embodiments, the data channel is a downlink data channel, and in a case where the first frequency-domain resource is an available frequency-domain resource, the number of second resource blocks includes at least one of: a number of resource blocks belonging to a downlink transmission resource in the number of first resource blocks; a number of resource blocks belonging to a guard sideband in the number of first resource blocks; or a number of resource blocks belonging to an undetermined resource in the number of first resource blocks.

In some embodiments, the data channel is a downlink data channel, and in a case where the first frequency-domain resource is an unavailable frequency-domain resource, the number of second resource blocks includes at least one of: a number of resource blocks belonging to an uplink transmission resource in the number of first resource blocks; a number of resource blocks belonging to a guard sideband in the number of first resource blocks; a number of resource blocks belonging to a sidelink transmission resource in the number of first resource blocks; or a number of resource blocks belonging to an undetermined resource in the number of first resource blocks.

In some embodiments, the data channel is an uplink data channel, and in a case where the first frequency-domain resource is an available frequency-domain resource of the data channel, the number of second resource blocks includes at least one of: a number of resource blocks belonging to an uplink transmission resource in the number of first resource blocks; a number of resource blocks belonging to a guard sideband in the number of first resource blocks; or a number of resource blocks belonging to an undetermined resource in the number of first resource blocks.

In some embodiments, the data channel is an uplink data channel, and in a case where the first frequency-domain resource is an unavailable frequency-domain resource of the data channel, the number of second resource blocks includes at least one of: a number of resource blocks belonging to a downlink transmission resource in the number of first resource blocks; a number of resource blocks belonging to a guard sideband in the number of first resource blocks; a number of resource blocks belonging to a sidelink transmission resource in the number of first resource blocks; or a number of resource blocks belonging to an undetermined resource in the number of first resource blocks.

In some embodiments, the data channel is a first sidelink channel, and in a case where the first frequency-domain resource is an available frequency-domain resource of the data channel, the number of second resource blocks includes at least one of: a number of resource blocks belonging to a first sidelink transmission resource in the number of first resource blocks; a number of resource blocks belonging to a guard sideband in the number of first resource blocks; or a number of resource blocks belonging to an undetermined resource in the number of first resource blocks, wherein the first sidelink transmission resource is a sidelink resource corresponding to the first sidelink channel.

In some embodiments, the data channel is a first sidelink channel, and in a case where the first frequency-domain resource is an unavailable frequency-domain resource of the data channel, the number of second resource blocks includes at least one of: a number of resource blocks belonging to a second sidelink transmission resource in the number of first resource blocks; a number of resource blocks belonging to a guard sideband in the number of first resource blocks; a number of resource blocks belonging to an uplink transmission resource in the number of first resource blocks; a number of resource blocks belonging to a downlink transmission resource in the number of first resource blocks; or a number of resource blocks belonging to an undetermined resource in the number of first resource blocks, wherein a transmission direction of the second sidelink transmission resource is not coincident with a transmission direction of a first sidelink transmission resource, and the first sidelink transmission resource is a sidelink resource corresponding to the first sidelink channel.

In some embodiments, the number of first resource blocks is dynamically configured for the data channel, or is semi-persistently configured for the data channel.

In some embodiments, configuration of the guard sideband is received by the first receiving module 2040, transmitted by the first transmitting module 2060, determined by the first determining module 2020, or determined by the first determining module 2020 after the first receiving module 2040 receives the report capability.

In some embodiments, the first determining module 2020 is further configured to: determine a number of REs in the data channel based on the target number of resource blocks; and determine the TBS based on at least one of a modulation mode of the data channel, a number of transmission layers of the data channel, a bit rate of the data channel, or the number of REs in the data channel.

In some embodiments, the first determining module 2020 is further configured to determine a frequency-domain resource corresponding to a transport block based on at least one of dynamic scheduling or semi-persistent scheduling.

In some embodiments, the apparatus is applicable to a first frequency-domain resource indication type and/or a second frequency-domain resource indication type, wherein the first frequency-domain resource indication type indicates the frequency-domain resource corresponding to the transport block by a bitmap, and the second frequency-domain resource indication type indicates the frequency-domain resource corresponding to the transport block by a start serial number of the resource block and a contiguous length of the resource block.

In summary, in the apparatus according to the embodiments, the TBS is determined based on the target number of resource blocks. As the target number of resource blocks determined based on at least one of the number of first resource blocks, the number of second resource blocks, the number of first time-domain units, or the number of second time-domain units is closer to the number of resource blocks actually used in the data transmission, the determined TBS is closer to the TBS actually used in the data transmission, the configured bit rate is closer to the actual bit rate, and the reliability of the data transmission is improved. In addition, the number of second resource blocks and the number of second time-domain units are configured based on distributions of available frequency-domain resources and unavailable frequency-domain resources in different configuration scenarios of the data channel, such that different solutions are provided for determining the target number of resource blocks.

FIG. 21 is a block diagram of an apparatus for determining a TBS according to some embodiments of the present disclosure. The apparatus includes at least part of a second determining module 2120, a second receiving module 2140, or a second transmitting module 2160.

The second determining module 2120 is configured to determine the TBS based on a target number of overheads, wherein the target number of overheads includes at least one of a number of first overheads or a number of second overheads, wherein the number of first overheads is different from the number of second overheads.

In some embodiments, the number of second overheads is greater than the number of first overheads.

In some embodiments, the second determining module 2020 is further configured to determine the TBS is determined based on at least one of: a number of first resource blocks and the number of first overheads, a number of first resource blocks and the number of second overheads, or a number of first resource blocks, the number of first overheads, and the number of second overheads, wherein the number of first resource blocks is configured for the data channel.

In some embodiments, the second determining module 2120 is further configured to determine the TBS based on the number of first resource blocks and the number of first overheads in a case where a time-domain unit configured for the data channel does not include a second resource part,.

In some embodiments, the second determining module 2120 is further configured to determine the TBS based on the number of first resource blocks and the number of second overheads in a case where a time-domain unit configured for the data channel includes a second resource part.

In some embodiments, the second determining module 2120 is further configured to determine the TBS based on the number of first resource blocks, the number of first overheads, and the number of second overheads in a case where a time-domain unit configured for the data channel includes a second resource part.

In some embodiments, the number of first overheads is configured by the network device, or is predefined in a communication protocol.

In some embodiments, the number of second overheads is configured by the network device, or is predefined in a communication protocol, or is determined based on a number of resource blocks.

In some embodiments, the number of first overheads is configured by the network device, or is predefined in a communication protocol.

In some embodiments, the apparatus further includes the second receiving module 2140, configured to receive the number of first overheads.

In some embodiments, the apparatus further includes the second transmitting module 2160, configured to transmit the number of first overheads.

In some embodiments, the number of second overheads is configured by the network device, or is predefined in a communication protocol, or is determined based on a number of resource blocks.

In some embodiments, the second receiving module 2140 is further configured to receive the number of second overheads.

In some embodiments, the second transmitting module 2160 is further configured to transmit the number of second overheads.

In some embodiments, the second determining module 2120 is further configured to determine the number of second overheads based on the number of second resource blocks.

In some embodiments, the second determining module 2120 is further configured to determine the number of second overheads based on a product of a number of available REs and the number of second resource blocks, or based on a sum of a product of a number of available REs and the number of second resource blocks and the number of first overheads, wherein the number of available REs is a number of available REs in a resource block, wherein the number of second resource blocks includes a number of resource blocks belonging to a first frequency-domain resource in the number of first resource blocks, and the number of first resource blocks is a number of resource blocks configured for a data channel.

In some embodiments, the second determining module 2120 is further configured to: determine the number of first overheads based on a set of first overheads; and/or determine the number of second overheads based on a set of second overheads, wherein number of set elements in the set of first overheads is the same as or different from a number of set elements in the set of second overheads.

In some embodiments, the second determining module 2120 is further configured to determine the target number of resource blocks based on at least one of the number of first resource blocks, the number of second resource blocks, the number of first time-domain units, or the number of second time-domain units, wherein the number of first resource blocks is a number of resource blocks configured for a data channel, the number of second resource blocks includes a number of resource blocks belonging to a first frequency-domain resource in the number of first resource blocks, the number of first time-domain units is a number of time-domain units corresponding to the data channel, and the number of second time-domain units includes a number of time-domain units corresponding to the first frequency-domain resource in the number of first time-domain units.

In some embodiments, the second determining module 2120 is further configured to determine the target number of resource blocks based on the number of first resource blocks.

In some embodiments, the target number of resource blocks is the number of first resource blocks.

In some embodiments, repetitive transmission is performed on a transport block, wherein a number of resource blocks corresponding to each transmission in the repetitive transmission is a number of third resource blocks corresponding to the each transmission, and the second determining module 2120 is further configured to determine the target number of resource blocks based on at least one of: a number of third resource blocks corresponding to a first transmission in the repetitive transmission; numbers of third resource blocks corresponding to at least two transmissions in the repetitive transmission; a minimum number in numbers of third resource blocks corresponding to at least two transmissions in the repetitive transmission; a maximum number in numbers of third resource blocks corresponding to at least two transmissions in the repetitive transmission; an average value of numbers of third resource blocks corresponding to at least two transmissions in the repetitive transmission; or a median value of numbers of third resource blocks corresponding to at least two transmissions in the repetitive transmission.

In some embodiments, the number of first resource blocks is dynamically configured for the data channel, or is semi-persistently configured for the data channel.

In some embodiments, a time frequency resource corresponding to the data channel includes at least one first resource part.

In some embodiments, the time frequency resource corresponding to the data channel includes a second resource part and one of the at least one first resource part, or a second resource part and two of the at least one first resource part.

In some embodiments, the at least one first resource part is configured by the network device, or is predefined in a communication protocol.

In some embodiments, the second resource part is configured by the network device, or is predefined in a communication protocol.

In some embodiments, the data channel is a downlink data channel, and the second resource part includes at least one of an uplink transmission resource, a guard sideband, or an undetermined resource.

In some embodiments, the data channel is an uplink data channel, and the second resource part includes at least one of a downlink transmission resource, a guard sideband, or an undetermined resource.

In some embodiments, the data channel is a first sidelink channel, and the second resource part includes at least one of a second sidelink transmission resource, a guard sideband, an uplink transmission resource, or a downlink transmission resource, wherein a transmission direction of the second sidelink transmission resource is not coincident with a transmission direction of a first sidelink transmission resource, and the first sidelink transmission resource is a sidelink resource corresponding to the first sidelink channel.

In some embodiments, the guard sideband is configured by the network device, determined based on a capability of the terminal device, or configured by the network device based on a report capability of the terminal device.

In some embodiments, configuration of the guard sideband is received by the second receiving module 2140, transmitted by the second transmitting module 2160, determined by the second determining module 2120, or determined by the second determining module 2120 in a case where the second receiving module 2140 receives the report capability.

In some embodiments, the second determining module 2120 is further configured to: determine a number of REs in the data channel based on the target number of resource blocks; and determine the TBS based on at least one of a modulation mode of the data channel, a number of transmission layers of the data channel, a bit rate of the data channel, or the number of REs in the data channel.

In some embodiments, a frequency-domain resource corresponding to a transport block is determined based on at least one of dynamic scheduling or semi-persistent scheduling.

In some embodiments, the apparatus is applicable to a first frequency-domain resource indication type and/or a second frequency-domain resource indication type, wherein the first frequency-domain resource indication type indicates the frequency-domain resource corresponding to the transport block by a bitmap, and the second frequency-domain resource indication type indicates the frequency-domain resource corresponding to the transport block by a start serial number of the resource block and a contiguous length of the resource block.

In summary, in the apparatus according to the embodiments, the TBS is determined based on the target number of overheads. As the target number of resource blocks determined based on the target number of overheads is closer to the number of resource blocks actually used in the data transmission, the determined TBS is closer to the TBS actually used in the data transmission, the configured bit rate is closer to the actual bit rate, and the reliability of the data transmission is improved. In addition, the number of first overheads and the number of second overheads are configured based on distributions of available frequency-domain resources and unavailable frequency-domain resources in different configuration scenarios of the data channel, such that different solutions are provided for determining the TBS.

It should be noted that for the apparatus according to the above embodiments, the division of the functional modules is merely exemplary. In practical application, the above functions may be assigned to different functional modules according to actual needs. That is, the internal structure of the device may be divided into different functional modules to implement all or a part of the above functions.

With regard to the apparatus in the above embodiments, the specific manner in which each module performs the operation has been described in detail in the embodiments related to the method, which is not described herein any further.

FIG. 22 is a schematic structural diagram of a communication device (a terminal device or a network device) according to some embodiments of the present disclosure. The communication device 2100 includes: a processor 2101, a receiver 2102, a transmitter 2103, a memory 2104, and a bus 2105.

The processor 2101 includes one or more processing cores, and achieves various functional applications and information processing by running software programs and modules. In some embodiments, the processor 2101 is configured to implement the function and processes of the above first determining module 2020 and/or the second determining module 2120.

The receiver 2102 and the transmitter 2103 are practiced as a communication assembly. The communication assembly is a communication chip. In some embodiments, the receiver 2102 is configured to achieve the function and processes of the above receiving module 2140. In some embodiments, the transmitter 2103 is configured to implement the function and processes of the first transmitting module 2060 and/or the second transmitting module 2160.

The memory 2104 is communicably connected to the processor 2101 over the bus 2105. The memory 2104 is configured to store one or more instructions, and the processor 2101, when loading and executing the one or more instructions, is caused to perform various processes in the above method embodiments.

In addition, the memory 2104 is practiced by any type of volatile or non-volatile storage device or combinations thereof. The volatile or non-volatile storage device includes but is not limited to a disk or optical disc, an electrically erasable programmable read-only memory (EEPROM), an erasable programmable read-only memory (EPROM), a persistent random-access memory (SRAM), a read-only memory (ROM), a magnetic memory, a flash memory, or a programmable read-only memory (PROM).

In some embodiments, the receiver 2102 receives signals/data independently, the processor 2101 controls the receiver 2102 to receive signals/data, the processor 2101 requests the receiver 2102 to receive signals/data, or, the processor 2101 cooperates with the receiver 2102 to receive signals/data.

In some embodiments, the transmitter 2103 transmits signals/data independently, the processor 2101 controls the transmitter 2103 to transmit signals/data, the processor 2101 requests the transmitter 2103 to transmit signals/data, or, the processor 2101 cooperates with the transmitter 2103 to transmit signals/data.

Some embodiments of the present disclosure further provide a computer-readable storage medium storing one or more programs, wherein the one or more programs, when loaded and run by a processor, cause the processor to perform the method for determining the TBS in the above method embodiments.

Some embodiments of the present disclosure further provide a chip. The chip includes programmable logic circuity and/or program instructions, wherein the chip, when running, is caused to perform the method for determining the TBS in the above method embodiments.

Some embodiments of the present disclosure further provide a computer program product. The computer program product, when running on a processor of a computer device, causes the computer device to perform the method for determining the TBS in the above method embodiments.

Some embodiments of the present disclosure further provide a computer program. The computer program includes one or more computer instructions, wherein the one or more computer instructions, when loaded and run on a processor of a computer device, cause the computer device to perform the method for determining the TBS in the above method embodiments.

It should be understood by those skilled in the art that in the above one or more embodiments, functions described in the embodiments of the present disclosure are practiced by the hardware, the software, the firmware or any combinations thereof. In a case where the functions are practiced by the software, the functions are stored in the computer-readable storage medium or are determined as one or more instructions or codes in the computer-readable storage medium for transmission. The computer-readable storage medium includes a computer storage medium and a communication medium, and the communication medium includes any medium facilitating transmission of the computer program from one place to another place. The storage medium is any available medium accessible by a general or specific computer.

Described above are merely exemplary embodiments of the present disclosure, and are not intended to limit the present disclosure. Any modifications, equivalent replacements, improvements and the like made within the spirit and principles of the present disclosure should be encompassed within the scope of protection of the present disclosure.

**Claims**

1. A method for determining a transport block size, performed by at least one of a network device or a terminal device, the method comprising:

   determining the transport block size based on a target number of resource blocks;
   wherein the target number of resource blocks is determined based on at least one of a number of first resource blocks, a number of second resource blocks, a number of first time-domain units, or a number of second time-domain units;
   wherein the number of first resource blocks is a number of resource blocks configured for a data channel, the number of second resource blocks comprises a number of resource blocks belonging to a first frequency-domain resource in the number of first resource blocks, the number of first time-domain units is a number of time-domain units corresponding to the data channel, and the number of second time-domain units comprises a number of time-domain units corresponding to the first frequency-domain resource in the number of first time-domain units.

2. The method according to claim 1, wherein

   the number of second resource blocks is the number of resource blocks belonging to the first frequency-domain resource in the number of first resource blocks; or
   the number of second resource blocks is a sum of the number of resource blocks belonging to the first frequency-domain resource in the number of first resource blocks and a number N of resource blocks;
   wherein the number N of resource blocks is a number of resource blocks acquired by extending the first frequency-domain resource in a frequency-domain direction, and N is greater than or equal to 0.

3. The method according to claim 1 or 2, wherein the first frequency-domain resource is an available frequency-domain resource corresponding to the data channel.

4. The method according to claim 3, wherein the target number of resource blocks is determined based on the number of second resource blocks.

5. The method according to claim 4, wherein the target number of resource blocks is the number of second resource blocks.

6. The method according to claim 1 or 2, wherein the first frequency-domain resource is an unavailable frequency-domain resource corresponding to the data channel.

7. The method according to claim 6, wherein

   the target number of resource blocks is determined based on a difference between the number of first resource blocks and the number of second resource blocks; or
   the target number of resource blocks is determined based on the number of first resource blocks, the number of second resource blocks, the number of first time-domain units, and the number of second time-domain units; or
   the target number of resource blocks is determined based on a ratio of the number of first time-domain units to the number of second time-domain units.

8. The method according to claim 7, wherein the target number of resource blocks is determined based on one of:

   a sum of a product of the number of first resource blocks and a first difference and a product of a second difference and a second ratio;
   a sum of a second difference and a product of the number of second resource blocks and a first difference; or
   a sum of the number of first resource blocks and a product of the number of second resource blocks and a second ratio;

wherein the first difference is an absolute value of a difference between 1 and the second ratio, the second ratio is a ratio of the number of second time-domain units to the number of first time-domain units, and the second difference is an absolute value of the difference between the number of first resource blocks and the number of second resource blocks.

9. The method according to any one of claims 1 to 8, wherein

repetitive transmission is performed on a transport block, wherein a number of resource blocks corresponding to each transmission in the repetitive transmission is a number of third resource blocks corresponding to the each transmission; and
the target number of resource blocks is determined based on at least one of:

a number of third resource blocks corresponding to a first transmission in the repetitive transmission;
numbers of third resource blocks corresponding to at least two transmissions in the repetitive transmission;
a minimum number in numbers of third resource blocks corresponding to at least two transmissions in the repetitive transmission;
a maximum number in numbers of third resource blocks corresponding to at least two transmissions in the repetitive transmission;
an average value of numbers of third resource blocks corresponding to at least two transmissions in the repetitive transmission; or
a median value of numbers of third resource blocks corresponding to at least two transmissions in the repetitive transmission.

10. The method according to any one of claims 1 to 9, wherein a time frequency resource corresponding to the data channel comprises at least one first resource part.

11. The method according to claim 10, wherein the time frequency resource corresponding to the data channel comprises:

a second resource part and one of the at least one first resource part; or
a second resource part and two of the at least one first resource part and a second resource part.

12. The method according to claim 10 or 11, wherein the at least one first resource part is configured by the network device, or is predefined in a communication protocol.

13. The method according to claim 10 or 11, wherein the at least one first resource part comprises at least one of an available resource, a guard sideband, or an undetermined resource;
wherein the undetermined resource is a time frequency resource with an undetermined transmission direction.

14. The method according to any one of claims 11 to 13, wherein the second resource part is configured by the network device, or is predefined in a communication protocol.

15. The method according to any one of claims 11 to 14, wherein the second resource part comprises at least one of an unavailable resource, a guard sideband, or an undetermined resource;
wherein the undetermined resource is a time frequency resource with an undetermined transmission direction.

16. The method according to any one of claims 1 to 15, wherein

the data channel is a downlink data channel; and
in a case where the first frequency-domain resource is an available frequency-domain resource, the number of second resource blocks comprises at least one of:

a number of resource blocks belonging to a downlink transmission resource in the number of first resource blocks;
a number of resource blocks belonging to a guard sideband in the number of first resource blocks; or
a number of resource blocks belonging to an undetermined resource in the number of first resource blocks.

17. The method according to any one of claims 1 to 15, wherein

the data channel is a downlink data channel; and

in a case where the first frequency-domain resource is an unavailable frequency-domain resource, the number of second resource blocks comprises at least one of:

a number of resource blocks belonging to an uplink transmission resource in the number of first resource blocks;

a number of resource blocks belonging to a guard sideband in the number of first resource blocks;

a number of resource blocks belonging to a sidelink transmission resource in the number of first resource blocks; or

a number of resource blocks belonging to an undetermined resource in the number of first resource blocks.

18. The method according to any one of claims 1 to 15, wherein

the data channel is an uplink data channel; and

in a case where the first frequency-domain resource is an available frequency-domain resource of the data channel, the number of second resource blocks comprises at least one of:

a number of resource blocks belonging to an uplink transmission resource in the number of first resource blocks;

a number of resource blocks belonging to a guard sideband in the number of first resource blocks; or

a number of resource blocks belonging to an undetermined resource in the number of first resource blocks.

19. The method according to any one of claims 1 to 15, wherein

the data channel is an uplink data channel; and

in a case where the first frequency-domain resource is an unavailable frequency-domain resource of the data channel, the number of second resource blocks comprises at least one of:

a number of resource blocks belonging to a downlink transmission resource in the number of first resource blocks;

a number of resource blocks belonging to a guard sideband in the number of first resource blocks;

a number of resource blocks belonging to a sidelink transmission resource in the number of first resource blocks; or

a number of resource blocks belonging to an undetermined resource in the number of first resource blocks.

20. The method according to any one of claims 1 to 15, wherein

the data channel is a first sidelink channel; and

in a case where the first frequency-domain resource is an available frequency-domain resource of the data channel, the number of second resource blocks comprises at least one of:

a number of resource blocks belonging to a first sidelink transmission resource in the number of first resource blocks;

a number of resource blocks belonging to a guard sideband in the number of first resource blocks; or

a number of resource blocks belonging to an undetermined resource in the number of first resource blocks, wherein the first sidelink transmission resource is a sidelink resource corresponding to the first sidelink channel.

21. The method according to any one of claims 1 to 15, wherein

the data channel is a first sidelink channel; and

in a case where the first frequency-domain resource is an unavailable frequency-domain resource of the data channel, the number of second resource blocks comprises at least one of:

a number of resource blocks belonging to a second sidelink transmission resource in the number of first resource blocks;

a number of resource blocks belonging to a guard sideband in the number of first resource blocks;

a number of resource blocks belonging to an uplink transmission resource in the number of first resource blocks;
a number of resource blocks belonging to a downlink transmission resource in the number of first resource blocks; or
a number of resource blocks belonging to an undetermined resource in the number of first resource blocks, wherein a transmission direction of the second sidelink transmission resource is not coincident with a transmission direction of a first sidelink transmission resource, and the first sidelink transmission resource is a sidelink resource corresponding to the first sidelink channel.

22. The method according to any one of claims 1 to 21, wherein the number of first resource blocks is dynamically configured for the data channel, or the number of first resource blocks is semi-persistently configured for the data channel.

23. The method according to any one of claims 13 or 15 to 21, wherein the guard sideband is configured by the network device, determined based on a capability of the terminal device, or configured by the network device based on a report capability of the terminal device.

24. The method according to any one of claims 1 to 23, wherein

the transport block size is determined based on at least one of a modulation mode of the data channel, a number of transmission layers of the data channel, a bit rate of the data channel, or a number of resource elements (REs) in the data channel; and
the number of REs in the data channel is determined based on the target number of resource blocks.

25. The method according to any one of claims 1 to 24, wherein a frequency-domain resource corresponding to a transport block is determined based on at least one of dynamic scheduling or semi-persistent scheduling.

26. The method according to any one of claims 1 to 25, wherein a frequency-domain resource corresponding to a transport block is indicated based on at least one of a first frequency-domain resource indication type or a second frequency-domain resource indication type;
wherein the first frequency-domain resource indication type indicates the frequency-domain resource corresponding to the transport block by a bitmap, and the second frequency-domain resource indication type indicates the frequency-domain resource corresponding to the transport block by a start serial number of the resource block and a contiguous length of the resource block.

27. A method for determining a transport block size, performed by at least one of a network device or a terminal device, the method comprising:

determining the transport block size based on a target number of overheads;
wherein the target number of overheads comprises at least one of a number of first overheads or a number of second overheads, wherein the number of first overheads is different from the number of second overheads.

28. The method according to claim 27, wherein the number of second overheads is greater than the number of first overheads.

29. The method according to claim 27 or 28, wherein the transport block size is determined based on at least one of:

a number of first resource blocks and the number of first overheads;
a number of first resource blocks and the number of second overheads; or
a number of first resource blocks, the number of first overheads, and the number of second overheads;
wherein the number of first resource blocks is configured for a data channel.

30. The method according to claim 29, wherein in a case where a time-domain unit configured for the data channel does not comprise a second resource part, the transport block size is determined based on the number of first resource blocks and the number of first overheads.

31. The method according to claim 29, wherein in a case where a time-domain unit configured for the data channel comprises a second resource part, the transport block size is determined based on the number of first resource blocks and the number of second overheads.

32. The method according to claim 29, wherein in a case where a time-domain unit configured for the data channel comprises a second resource part, the transport block size is determined based on the number of first resource blocks, the number of first overheads, and the number of second overheads.

33. The method according to any one of claims 27 to 32, wherein

the number of first overheads is configured by the network device, or is predefined in a communication protocol; and

the number of second overheads is configured by the network device, or is predefined in a communication protocol, or is determined based on a number of resource blocks.

34. The method according to claim 33, wherein the number of second overheads being determined based on the number of resource blocks means that:

the number of second overheads is determined based on a product of a number of available resource elements (REs) and a first ratio; or

the number of second overheads is determined based on a sum of a product of a number of available REs and a first ratio and the number of first overheads;

wherein the number of available REs is a number of available REs in a resource block, and the first ratio is a ratio of a number of second resource blocks to a number of first resource blocks, wherein the number of second resource blocks comprises a number of resource blocks belonging to a first frequency-domain resource in the number of first resource blocks, and the number of first resource blocks is a number of resource blocks configured for a data channel.

35. The method according to claim 34, wherein

the number of second resource blocks is the number of resource blocks belonging to the first frequency-domain resource in the number of first resource blocks; or

the number of second resource blocks is a sum of the number of resource blocks belonging to the first frequency-domain resource in the number of first resource blocks and a number N of resource blocks;

wherein the number N of resource blocks is a number of resource blocks around the first frequency-domain resource, and N is greater than or equal to 0.

36. The method according to claim 34 or 35, wherein the first frequency-domain resource is an unavailable frequency-domain resource corresponding to the data channel.

37. The method according to any one of claims 27 to 36, wherein

the number of first overheads is determined based on a set of first overhead numbers; and/or

the number of second overheads is determined based on a set of second overhead numbers;

wherein a number of set elements in the set of first overhead numbers is the same or different from a number of set elements in the set of second overhead numbers.

38. The method according to any one of claims 34 to 36, wherein the number of first resource blocks is dynamically configured for the data channel, or the number of first resource blocks is semi-persistently configured for the data channel.

39. The method according to any one of claims 27 to 38, wherein

repetitive transmission is performed on a transport block, wherein the transport block size corresponding to each transmission in the repetitive transmission is a first transport block size corresponding to the each transmission; and

the transport block size is determined based on at least one of:

a first transport block size corresponding to a first transmission in the repetitive transmission;

first transport block sizes corresponding to at least two transmissions in the repetitive transmission;

a minimum number in first transport block sizes corresponding to at least two transmissions in the repetitive transmission;

a maximum number in first transport block sizes corresponding to at least two transmissions in the repetitive transmission;
an average value of first transport block sizes corresponding to at least two transmissions in the repetitive transmission; or
a median value of first transport block sizes corresponding to at least two transmissions in the repetitive transmission.

40. The method according to any one of claims 29 to 32, 25 to 37, or 39, wherein a time frequency resource corresponding to the data channel comprises at least one first resource part.

41. The method according to claim 40, wherein the time frequency resource corresponding to the data channel comprises:

a second resource part and one of the at least one first resource part; or
a second resource part and two of the at least one first resource part and a second resource part.

42. The method according to claim 40 or 41, wherein the at least one first resource part is configured by the network device, or is predefined in a communication protocol.

43. The method according to claim 40 or 42, wherein the at least one first resource part comprises at least one of an available resource, a guard sideband, or an undetermined resource;
wherein the undetermined resource is a time frequency resource with an undetermined transmission direction.

44. The method according to any one of claims 41 to 43, wherein the second resource part is configured by the network device, or is predefined in a communication protocol.

45. The method according to any one of claims 41 to 44, wherein the second resource part comprises at least one of an unavailable resource, a guard sideband, or an undetermined resource;
wherein the undetermined resource is a time frequency resource with an undetermined transmission direction.

46. The method according to any one of claims 41 to 43, wherein

the data channel is a downlink data channel; and
the at least one first resource part comprises at least one of a downlink transmission resource, a guard sideband, or an undetermined resource.

47. The method according to any one of claims 41 to 45, wherein

the data channel is a downlink data channel; and
the second resource part comprises at least one of an uplink transmission resource, a guard sideband, a sidelink transmission resource, or an undetermined resource.

48. The method according to any one of claims 40 to 43, wherein
the data channel is an uplink data channel; and the at least one first resource part comprises at least one of an uplink transmission resource, a guard sideband, or an undetermined resource.

49. The method according to any one of claims 41 to 45, wherein

the data channel is an uplink data channel; and
the second resource part comprises at least one of a downlink transmission resource, a guard sideband, a sidelink transmission resource, or an undetermined resource.

50. The method according to any one of claims 40 to 43, wherein

the data channel is a first sidelink channel; and
the at least one first resource part comprises at least one of a first sidelink transmission resource, a guard sideband, or an undetermined resource;
wherein the first sidelink transmission resource is a sidelink resource corresponding to the first sidelink channel.

51. The method according to any one of claims 41 to 45, wherein

the data channel is a first sidelink channel; and
the second resource part comprises at least one of a second sidelink transmission resource, a guard sideband, an uplink transmission resource, a downlink transmission resource, or an undetermined resource;
wherein a transmission direction of the second sidelink transmission resource is not coincident with a transmission direction of a first sidelink transmission resource, and the first sidelink transmission resource is a sidelink resource corresponding to the first sidelink channel.

52. The method according to any one of claims 43 or 45 to 51, wherein the guard sideband is configured by the network device, determined based on a capability of the terminal device, or configured by the network device based on a report capability of the terminal device.

53. The method according to any one of claims 27 to 52, wherein

the transport block size is determined based on at least one of a modulation mode of a data channel, a number of transmission layers of a data channel, a bit rate of a data channel, or a number of resource elements (REs) in a data channel;
wherein the number of REs in the data channel is determined based on the target number of overheads.

54. The method according to any one of claims 27 to 53, wherein a frequency-domain resource corresponding to a transport block is determined based on at least one of dynamic scheduling or semi-persistent scheduling.

55. The method according to any one of claims 27 to 54, wherein a frequency-domain resource corresponding to a transport block is indicated based on at least one of a first frequency-domain resource indication type or a second frequency-domain resource indication type;
wherein the first frequency-domain resource indication type indicates the frequency-domain resource corresponding to the transport block by a bitmap, and the second frequency-domain resource indication type indicates the frequency-domain resource corresponding to the transport block by a start serial number of the resource block and a contiguous length of the resource block.

56. An apparatus for determining a transport block size, comprising:

a first determining module, configured to determine the transport block size based on a target number of resource blocks;
wherein the target number of resource blocks is determined based on at least one of a number of first resource blocks, a number of second resource blocks, a number of first time-domain units, or a number of second time-domain units;
wherein the number of first resource blocks is a number of resource blocks configured for a data channel, the number of second resource blocks comprises a number of resource blocks belonging to a first frequency-domain resource in the number of first resource blocks, the number of first time-domain units is a number of time-domain units corresponding to the data channel, and the number of second time-domain units comprises a number of time-domain units corresponding to the first frequency-domain resource in the number of first time-domain units.

57. An apparatus for determining a transport block size, comprising:

a first determining module, configured to determine the transport block size based on a target number of overheads;
wherein the target number of overheads comprises at least one of a number of first overheads or a number of second overheads, wherein the number of first overheads is different from the number of second overheads.

58. A terminal device, comprising: a processor, a transceiver communicably connected to the processor, and a memory storing one or more executable instructions; wherein the processor is configured to load and execute the one or more executable instructions to cause the terminal device to perform the method for determining the transport block size as defined in any one of claims 1 to 26 or 27 to 55.

59. A network device, comprising: a processor, a transceiver communicably connected to the processor, and a memory storing one or more executable instructions; wherein the processor is configured to load and execute the one or more executable instructions to cause the terminal device to perform the method for determining the transport block size as defined in any one of claims 1 to 26 or 27 to 55.

60. A computer-readable storage medium, storing one or more executable instructions, wherein the one or more executable instructions, when loaded and executed by a processor, cause the processor to perform the method for determining the transport block size as defined in any one of claims 1 to 26 or 27 to 55.

61. A chip, comprising: programmable logical circuity and/or one or more programs, wherein the chip is configured to perform the method for determining the transport block size as defined in any one of claims 1 to 26 or 27 to 55.

62. A computer program product, comprising: one or more computer instructions, wherein the one or more computer instructions are stored in a computer-readable storage medium, and when read and executed by a processor of a computer device, cause the computer device to perform the method for determining the transport block size as defined in any one of claims 1 to 26 or 27 to 55.

63. A computer program, comprising: one or more computer instructions, wherein the one or more computer instructions, when loaded and executed by a processor of a computer device, cause the computer device to perform the method for determining the transport block size as defined in any one of claims 1 to 26 or 27 to 55.

FIG. 1

Bitmap
010001101

| 0 | 1 | 0 | 0 | 0 | 1 | 1 | 0 | 1 |

RBG 0　RBG 1　RBG 2　RBG 3　RBG 4　RBG 5　RBG 6　RBG 7　RBG 8

FIG. 2

RIV

$RB_{start}$　　$L_{RBs}$

RB 0　RB 1　RB 2　RB 3　RB 4　RB 5　RB 6　RB 7　RB 8　RB 9　RB 10　RB 11　RB 12　RB 13　RB 14　RB 15　RB 16　RB 17

FIG. 3

410

420

Uplink
Downlink

430

First sidelink
Second sidelink

FIG. 4

| 510 |
| --- |
| Determining a TBS based on a target number of resource blocks |

FIG. 5

| 610 |
| --- |
| Determining a target number of resource blocks based on a number of second resource blocks |

| 630 |
| --- |
| Determining a TBS based on the target number of resource blocks |

| 650 |
| --- |
| Receiving a TB |

FIG. 6

Frequency-domain resource configured for a data channel

First frequency-domain resource

Frequency-domain resource

Time-domain unit

FIG. 7

Frequency-domain resource configured for a data channel

First frequency-domain resource

Data channel

First frequency-domain resource

Frequency-domain resource

Time-domain unit

FIG. 8

FIG. 9

FIG. 10

Determining a target number of resource blocks based on a number of at least one of a number of first resource blocks, a number of second resource blocks, a number of first time-domain units, or a number of second time-domain units — 1110

Determining a TBS based on the target number of resource blocks — 1130

Receiving a TB — 1150

FIG. 11

FIG. 12

Frequency-
domain resource
configured for a
data channel

Data channel

First frequency-
domain resource

Data channel

Frequency-
domain resource

Time-domain unit

FIG. 13

RBG 5

RBG 4

RBG 3

RBG 2

RBG 1

RBG 0

Unavailable
frequency-
domain
resource

FIG. 14

Determining a number of third resource
blocks

1510

Determining a target number of resource
blocks based on the number of third
resource blocks

1530

Determining a TBS based on the target
number of resource blocks

1550

Receiving a TB

1570

FIG. 15

RBG 7
RBG 6
RBG 5
RBG 4
RBG 3
RBG 2
RBG 1
Frequency    RBG 0
domain

Uplink
resource
part

First repetitive
transmission

Time
domain

RBG 7
RBG 6
RBG 5
RBG 4
RBG 3
RBG 2
RBG 1
RBG 0

Uplink
resource
part

Second repetitive
transmission

RBG 7
RBG 6
RBG 5
RBG 4
RBG 3
RBG 2
RBG 1
RBG 0

$j^{th}$ repetitive
transmission

▨ RB allocated to PDSCH

FIG. 16

RBG 7
RBG 6
RBG 5
RBG 4
RBG 3
RBG 2
RBG 1
Frequency    RBG 0
domain

Uplink
resource
part

First repetitive
transmission

Time
domain

RBG 7
RBG 6
RBG 5
RBG 4
RBG 3
RBG 2
RBG 1
RBG 0

Uplink
resource
part

$n^{th}$ repetitive
transmission

▨ RB allocated to PDSCH

FIG. 17

RBG 7
RBG 6
RBG 5
RBG 4
RBG 3
RBG 2
RBG 1
RBG 0

Uplink
resource
part

First repetitive
transmission

Time
domain

RBG 7
RBG 6
RBG 5
RBG 4
RBG 3
RBG 2
RBG 1
RBG 0

Uplink
resource
part

Second repetitive
transmission

RBG 7
RBG 6
RBG 5
RBG 4
RBG 3
RBG 2
RBG 1
RBG 0

$p^{th}$ repetitive
transmission

▨ RB allocated to PDSCH

FIG. 18

Determining a target number of resource blocks — 1910

↓

Determining a TBS based on the target number of overheads — 1930

↓

Receiving a TB — 1950

FIG. 19

First receiving module — 2040

First determining module — 2020

First transmitting module — 2060

FIG. 20

Second receiving module — 2140

Second determining module — 2120

Second transmitting module — 2160

FIG. 21

Communication device 2100

Processor — 2101

Transceiver — 2103

Bus — 2105

Receiver — 2102

Memory — 2104

FIG. 22

## INTERNATIONAL SEARCH REPORT

| International application No. |
| --- |
| **PCT/CN2023/076293** |

| A. | CLASSIFICATION OF SUBJECT MATTER |
| --- | --- |

H04W 72/12(2023.01)i

According to International Patent Classification (IPC) or to both national classification and IPC

| B. | FIELDS SEARCHED |
| --- | --- |

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNTXT, CNABS, DWPI, VEN, 3GPP: 传输块, 大小, 资源块, 时域, 单元, 频域, 数据信道, 目标, 开销, transport block, size, number, resource block, time domain, frequency domain, data channel, target, overhead

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109803432 A (HUAWEI TECHNOLOGIES CO., LTD.) 24 May 2019 (2019-05-24) description, paragraphs 0006-0210 | 1-63 |
| X | CN 109803426 A (HUAWEI TECHNOLOGIES CO., LTD.) 24 May 2019 (2019-05-24) description, paragraphs 0004-0136 | 1-63 |
| A | CN 113890672 A (VIVO COMMUNICATION TECHNOLOGY CO., LTD.) 04 January 2022 (2022-01-04) entire document | 1-63 |
| A | WO 2022199607 A1 (HUAWEI TECHNOLOGIES CO., LTD.) 29 September 2022 (2022-09-29) entire document | 1-63 |
| A | ERICSSON. "On Frequency-domain and Time-domain Resource Allocation" *3GPP TSG-RAN WG1 Meeting #89 R1-1709095*, No. TSGR1_89, 19 May 2017 (2017-05-19), entire document | 1-63 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 October 2023** | **18 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/076293**

| Patent document cited in search report | | | Publication date (day/month/year) | Patent family member(s) | | | Publication date (day/month/year) |
|---|---|---|---|---|---|---|---|
| CN | 109803432 | A | 24 May 2019 | US | 2020128438 | A1 | 23 April 2020 |
| | | | | EP | 3599790 | A1 | 29 January 2020 |
| | | | | WO | 2019095999 | A1 | 23 May 2019 |
| | | | | IN | 201937042911 | A | 01 May 2020 |
| CN | 109803426 | A | 24 May 2019 | EP | 3606242 | A1 | 05 February 2020 |
| | | | | US | 2020128529 | A1 | 23 April 2020 |
| | | | | WO | 2019096022 | A1 | 23 May 2019 |
| | | | | IN | 201937044196 | A | 22 May 2020 |
| CN | 113890672 | A | 04 January 2022 | | None | | |
| WO | 2022199607 | A1 | 29 September 2022 | CN | 115118380 | A | 27 September 2022 |

Form PCT/ISA/210 (patent family annex) (July 2022)